# EUROPEAN PATENT SPECIFICATION

(11) **EP 1 679 227 B1**
(45) Date of publication and mention of the grant of the patent: **11.08.2010**
(21) Application number: 06250057.4
(22) Date of filing: 06.01.2006
(51) Int. Cl.: B60Q 1/26, B60Q 1/38, B60Q 1/46, B60Q 1/44

(54) **A turn signal indicator lamp system, a brake light system and a headlight system for a car**
Ein Richtungsanzeigerleuchtensystem, ein Bremslichtsystem und ein Scheinwerfersystem für ein Kraftfahrzeug
Système de Clignotant, système feux de freinage et système de phares pour véhicule

(30) Priority: 06.01.2005 JP 2005001907
(43) Date of publication of application: 12.07.2006
(73) Proprietor: Yugen Kaisha Jiro Collection, Utsunomiya City Tochigi (JP)
(72) Inventor: Satoh, Jiro, Utsunomiya City, Tochigi Prefecture (JP)
(74) Representative: Taylor, Adam David

(56) References cited:
- DE-A1- 10 309 039
- DE-A1- 10 313 337
- FR-A- 2 560 353
- GB-A- 1 243 918
- US-A1- 2001 040 810

## Description

This invention relates to a turn signal indicator lamp system, a brake light system and a headlight system for a car, and more particularly to a turn signal indicator lamp system, a brake light system and a headlight system for a car whereby luminous intensity of the turn signal indicator lamp and of the brake light and the beam of the headlight can be adjusted in response to a running condition of the car.

According to the modern cars, either one of the right and left turn signal indicator lamps is turned on and off in order to show the turning direction of the car to the oncoming or neighboring cars when turning right or left or to change its traffic lane.

Moreover, the right and left turn signal indicator lamps are turned on and off to show when parking or a traffic jam to the neighboring cars by a hazard warning device.

It should be appreciated that blinking of the right and left turn signal indicator lamps is to show an intention of a driver in the car to the other drivers in the neighboring cars and to attract attention of the other drivers. When the right and left turn signal indicator lamps are irradiated only without being turned on or off, it is impossible to attract attention of the drivers around the neighboring cars, thus increasing danger of causing traffic accidents. This is the reason why the right and left turn signal indicator lamps are turned on or off.

However, a number of minor collisions between the neighboring cars are increasing frequently when turning right or left or changing a traffic lane, and rear end collisions between the parked and jammed cars are also happening everyday.

Various factors are considered for the traffic accidents. For example, even if a driver has expressed his car's intention of a running lane by a winker of a hazard lamp, another driver has not noticed the intention of the front car correctly, and the another driver has made a wrong estimate for the difference of the speeds and the distance between two cars.

These factors are insoluble easily by only blinking the right and left turn signal indicator lamps due to a lot of recent traffic accidents.

That is to say, it should be understood that the intention of one car must be transmitted correctly to the other cars. A contact collision between the two cars when turning right or left or changing a traffic lane can be decreased.

In accordance with the recent car, a rear end brake lamp is turned "on" by braking to show the rear cars stopping when reducing speed or stopping the car. The brake light is unified "red" as a rule in order to show the intention of the car for attracting the attention of the other cars.

However, the rear end collisions are still happening. Especially, there is a jump in an increase of traffic accidents when hitting the brakes.

Various factors are considered for the traffic accidents. For example, even if a driver has expressed his car's intention of a running lane by a winker of a hazard lamp, another driver has not noticed the intention of the front car correctly, and the another driver made a wrong estimate for the difference of the speeds and the distance between two cars.

In addition, the headlight of the modem car is turned on in order to ensure a visibility and also to show its existence when running at night.

As a rule, there are two types of such a headlight such as a low beam headlight, which decreases dazzling, and a high beam headlight in order to irradiate the range as far as possible.

When the modem car is running with the high beam on, a driver in an oncoming car and the drivers in the other cars running ahead can notice the existence of the first car as quickly as possible, thus causing much trouble for the drivers in the oncoming car and the other cars with the heavy dazzling of the first car.

Accordingly, most of the cars run with the low beam headlights so that it takes some time for the drivers in the oncoming car and the other cars to recognize the existence of the first car and also to cause the traffic accidents which can be avoided when the first car had been recognized earlier.

As explained in the foregoing paragraphs, it is important to express correctly the intention of one' car to the other cars, and it is indispensable to attract attention of the other cars toward the one's car.

In other words, the traffic accidents cannot be decreased even if the one driver drives more carefully until the other drivers drive the other cars more carefully.

In view of the foregoing facts, a new technology for the conventional cars relates to the safety of the one's own car only, but a new technology relating to the other cars and attracting attention of the other vehicles has rarely been proposed.

In view of the foregoing paragraphs, this invention relates to a turn signal indicator lamp system, a brake light system and a headlight system for a car, and more particularly to a turn signal indicator lamp system, a brake light system and a headlight system for a car whereby luminous intensity of the turn signal indicator lamp and of the brake light and the beam of the headlight can be adjusted in response to a running condition of the car.

DE 10309039 discloses a vehicle with adjustable lighting, where the lighting is controlled based on the vehicle's position.

The present invention provides a lamp apparatus for a car which consists of one or more of a turn signal indicator lamp system, a brake light system or a headlight system for a car; the apparatus comprising:
a car speed detection unit for detecting a car speed as a running condition of the car, or an outer luminous intensity detection unit for detecting a luminous intensity around the car as a running condition of the car;
a calculation unit for calculating a desired luminous intensity for the indicator lamp or the brake light on the basis of the detected car speed or luminous intensity around the car, or for calculating a desired irradiated angle of the headlight on the basis of the detected car speed; and
a control unit for controlling the luminous intensity of the indicator lamp or the brake light, or for controlling the irradiated angle of the headlight;
whereby the luminous intensity of the indicator lamp, the luminous intensity of the brake light, or the irradiated angle of the headlight is controlled automatically according to a running condition of the car.

This invention relates to a turn signal indicator lamp system for a car, which comprises: a car speed detection unit for detecting a car speed, a luminous detection unit for detecting luminous intensity around the car, and a luminous intensity calculation unit for calculating the luminous intensity of the turn signal indicator lamp detected by the luminous intensity detection unit, and a luminous intensity control unit for controlling an irradiated luminous intensity of the turn signal indicator lamp in accordance with the luminous intensity calculated by the luminous intensity control unit.

This invention relates to a turn signal indicator lamp system for a car, which comprises an input provided with the luminous intensity calculation unit of the turn signal indicator lamp which is characterized in that luminous intensity of the turn signal indicator lamp is obtained by instruction inputted by the input together with an outer luminous intensity of the turn signal indicator lamp which is detected by the car speed detection unit and/or and the outer luminous intensity of the turn signal indicator lamp.

This invention relates to a brake light system for a car, which comprises a car speed detection unit for detecting a car speed, a luminous intensity calculation unit for calculating luminous intensity of the brake light and a luminous control unit.

This invention relates to a brake light system for a car, which comprises: an outer luminous detection unit for detecting an outer luminous intensity of the car, a luminous calculation unit for detecting luminous intensity of the lighted brake detecting unit for detecting an outer luminous intensity of the car and a luminous intensity control unit for controlling the irradiated luminous intensity of the lighted brake light in accordance with the luminous intensity detected by the luminous intensity control unit.

This invention relates to a brake light system for a car, which comprises a car speed detection unit for detecting a car speed, an outer luminous intensity detection unit for detecting an outer luminous intensity of the car, a luminous intensity calculation unit for detecting an outer luminous intensity of the lighted brake light and the outer luminous intensity detected by the outer luminous intensity calculation unit.

This invention relates to a brake light system for a car, which comprises an input provided with a luminous intensity calculation unit and a car speed detection unit whereby an outer luminous intensity of the brake light can be obtained by the car speed detected by the car speed detection unit and/or with an instruction inputted through the input.

This invention relates to a turn signal indicator lamp system for a car, which is combined with a brake light system for a car.

This invention relates to a headlight system for a car, which comprises a car speed detection unit, a luminous intensity calculation unit for calculating luminous intensity around a turn signal indicator lamp with the speed detected by the car speed detection unit, and a luminous intensity control unit for controlling the irradiated luminous intensity of the turn signal indicator lamp.

This invention relates to a headlight system for a car, which comprises an input provided at the control unit for controlling the irradiated angle for the headlight, which is characterized in that the irradiated angle of the headlight can be determined with the car speed together with an instruction from the input.

This invention relates to a turn signal indicator lamp system for a car, which is combined with a headlight system.

This invention relates to a brake light system for a car, which is combined with a headlight system.

This invention relates to a turn signal indicator lamp system for a car, which is combined with a brake light system for a car and a headlight system.

In accordance with the present turn signal indicator lamp system for a motor vehicle, it becomes possible to adjust an irradiation angle of the turn signal indicate lamps in response to a running condition of the car and also to show correctly and surely a lane and the turning direction and intention of the car to the neighboring car when turning right or left or changing a traffic lane whereby a contact collision with the oncoming traffic can be decreased.

Similarly, it is possible for a front car driver to recognize a change of the traffic lane of a rear car by watching blinking of the turn signal indicator lamp through a rearview mirror of the front car.

In addition, it is possible for the rear car driver to confirm a change of the traffic lane of the front car by the turn signal indicator lamp of the front car so that a contact collision caused by a rapid change of the running lane can be decreased.

When parking or traffic jam, it becomes possible to decrease a rear end collision into the last car by informing correctly and surely an intention of the last car to the other cars through blinking a pair of right and left turn signal indicator lamps.

In accordance with this brake light system for a car, it is possible to show an intention of one's car to the neighboring or oncoming other cars when slow - downing traffic jam or hitting the brakes correctly and surely by changing an irradiated luminous intensity of the brake light due to the running condition of the one's car, thus enabling to decrease the rear end collision into the following cars to the neighboring car by a hazard warning device.

According to the headlight system for a car, it is possible to show an existence of one's car to the oncoming and forward - running other cars correctly and surely by changing an irradiated luminous intensity of the headlight system due to the running condition of one's car, thus enabling to decrease a possible traffic accident such as a contact or rear end collision.

Preferred embodiments of the present invention will now be described by way of example only and with reference to the accompanying drawings in which:
Fig. 1 is a flow chart showing the first mode of a turn signal indicator lamp system of this invention.
Fig. 2 is a flow chart showing a moving condition of the first mode of the turn signal indicator lamp system of this invention.
Fig. 3 is a block diagram showing the second mode of the turn signal indicator lamp system of this invention.
Fig. 4 is a flow chart showing a moving condition of the second mode of the turn signal indicator lamp system of this invention.
Fig. 5 is a block diagram showing the third mode of the turn signal indicator lamp system of this invention.
Fig. 6 is a flow chart showing a moving condition of the third mode of the turn signal indicator lamp system of this invention.
Fig.7 is a block diagram showing the fourth mode of the turn signal indicator lamp system of this invention.
Fig.8 is a flow chart showing a moving condition of the fourth mode of the turn signal indicator lamp system of this invention.
Fig.9 is a block diagram showing the first mode of a brake lamp system of this invention.
Fig.10 is a flow chart showing a moving condition of the first mode of the brake lamp system of this invention.
Fig.11 is a block diagram showing the second mode of the brake lamp system of this invention;
Fig.12 is a flow chart showing a moving condition of the second mode of the brake lamp system of this invention.
Fig. 13 is a block diagram showing the third mode of the brake lamp system of this invention;
Fig. 14 is a flow chart showing a moving condition of the third mode of the brake lamp system of this invention.
Fig.15 is a block diagram showing the fourth mode of the brake lamp system of this invention;
Fig.16 is a flow chart showing a moving condition of the fourth mode of the brake lamp system of this invention.
Fig.17 is a block diagram showing the fourth mode of the brake lamp system of this invention;
Fig. 18 is a block diagram showing another mode of a turn signal indicator lamp and a brake lamp system of this invention;
Fig. 19 is a flow chart showing a moving condition of the turn signal indicator lamp and a brake lamp system of this invention;
Fig.20 is a block diagram showing the first mode of a headlight system of this invention;
Fig.21 is a flow chart showing a moving condition of the first mode of the headlight system of this invention;
Fig.22 is a flow chart showing a moving condition of the first mode of the headlight system of this invention;

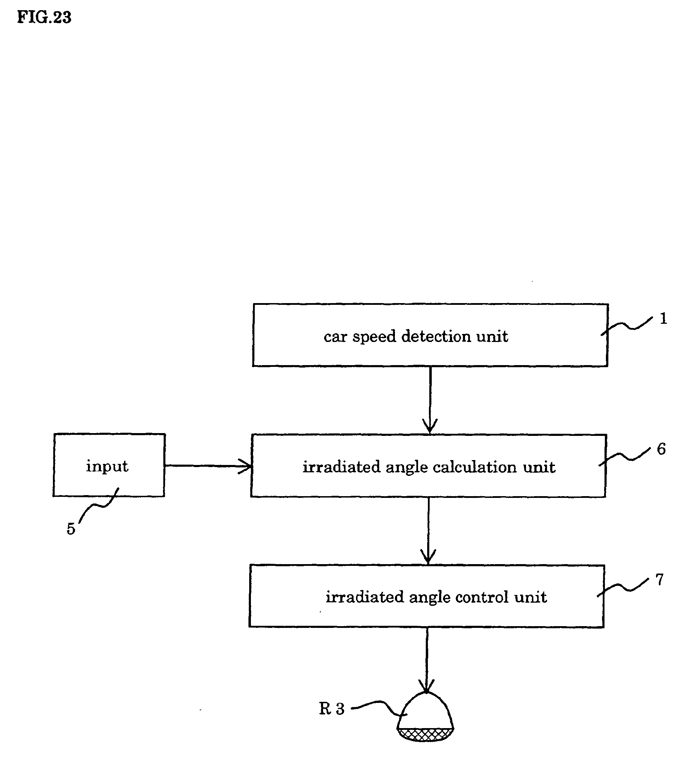

Fig.23 is a block diagram showing a moving condition of the second mode of the headlight system of this invention; and
Fig.24 is a flow chart showing a moving condition of the second mode of the headlight system of this invention.

The turn signal indicator lamp system and brake light system of this invention is characterized in that both of an irradiated outer luminous intensity of a turn signal indicator lamp R1 and a brake light R2 are changed by the running condition of one's car to show the intention of the car to the other cars correctly and surely.

A mode for carrying out the invention of the turn signal indicator lamp and brake lamp for the car will be explained with an example shown in the drawings.

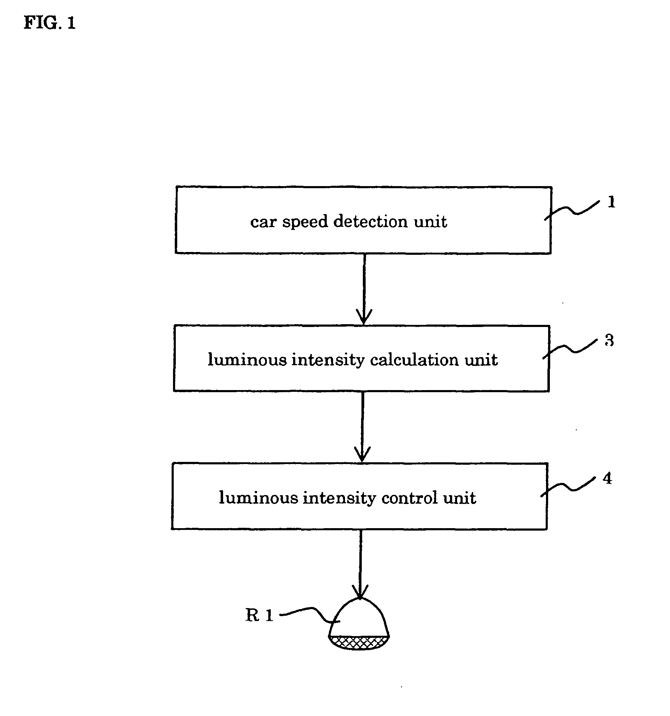

Fig. 1 is a block diagram of the first mode of the turn signal indicator lamp system of this invention. The turn signal indicator lamp system comprises a car speed detection unit 1, a luminous intensity calculation unit 3 for detecting luminous intensity of a turn signal indicator lamp R1 on the basis of a car speed detection unit 1 and a luminous intensity control unit 4 for controlling luminous intensity of the turn signal indicator lamp R1 on the basis of luminous intensity detected by the luminous calculation unit 3.

An induced electric current is produced through a rotation of a pulse generator, which is provided at a transmission gear, is usually detected by the car speed detection unit 1, which current is detected through a wavelength adjusting circuit.

However, a frequency of a car speed pulse varies according to the type of a car, and there are a two pulse type system, four pulse type system, eight pulse type system or the like. A setting of car speed detection can be changed by a switch or by a volume control (VR).

It becomes possible even for the standard type car having no car speed signal system to detect a car speed by providing a car speed detecting adaptor, by which a given pulse signal is output through a rotation of a meter cable

On the basis of the car speed detected by the car speed detection unit 1, the luminous intensity calculation unit 3 is driven to obtain the desired luminous intensity through a calculation circuit of a luminous intensity control. A program written in advance in the ROM carries out a method of calculation.

Namely, when luminous intensity of the turn signal indicator lamp R1 is controlled by a car speed, such instructions shown in the Tables 1 or 2, which are written in advance as a program, can be used.

It should be understood that these instructions shown in the Tables 1 or 2 are illustrative only, and the calculation method can be changed wishfully by a content of a program to be written in advance in the ROM.

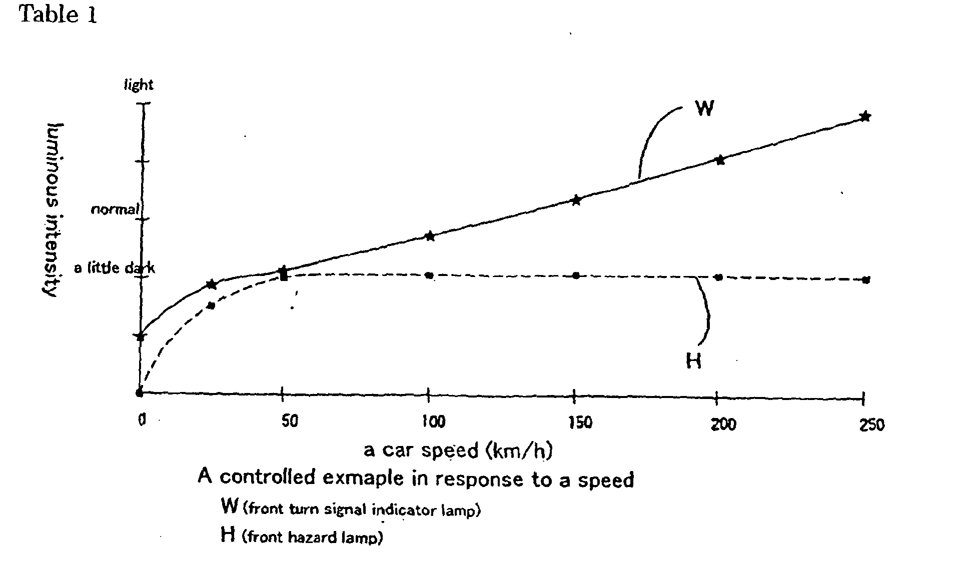

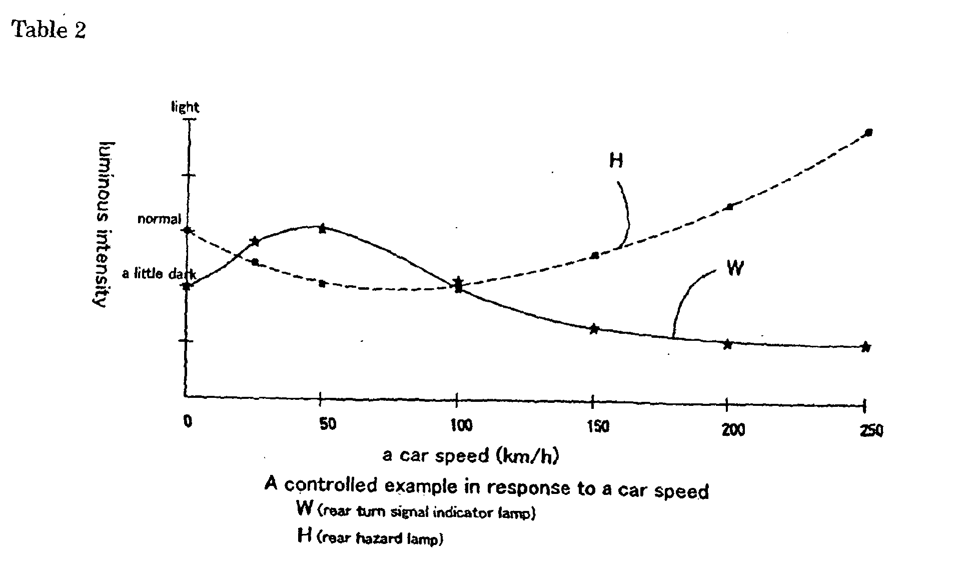

Luminous intensity of the turn signal indicator lamp R1 is not calculated uniformly, but it is considered to make some differences each among the luminous intensity of the front, rear, right or left turn signal indicator lamps R1.

Namely, when it is desired to attract attention of the car approaching from the back by a hazard operation, luminous intensity of the front turn signal indicator lamp R1 can be decreased, and luminous intensity of the rear turn signal indicator lamp R1 is increased in order to make a luminous intensity difference. With such a structure, it is possible to decrease a luminous intensity of the unnecessary turn signal indicator lamp, thus enabling to extend a life span of the turn signal indicator lamp R1.

In addition, it is possible to improve a structure of the luminous intensity calculation unit 3 for detecting not only a car speed, but also for detecting simultaneously instruction such as a braking value, an accelerating amount, an on/off operation of a switch both for the turn signal indicator lamps and hazard lamp and also a calculating instruction for the luminous intensity.

In addition, it is possible to improve a structure of the luminous intensity calculation unit 3.

Furthermore, the car speed detection unit 1 can be improved into a structure for the luminous intensity calculation unit 3, which calculates not only a car speed, but also detects a change ratio of a car speed per a unit time in order to obtain an instruction for the luminous intensity calculation unit 3.

With the improved structure, it becomes possible to find the detailed running condition, which cannot be obtained only by the car speed, but also the improved luminous intensity can be obtained on the basis of the current condition by the luminous intensity calculation unit 3.

A luminous intensity control unit 4 controls a supplied electric current into the turn signal indicator lamp R1, but the structure of the luminous intensity control unit 4 is not limited for such a structure.

For example, a variable resistor for the luminous intensity control unit 4 is connected in series in the power supply, a variable control for changing an electric voltage in response to a luminous intensity instruction from the aforementioned calculation circuit and a different relay control from the power supply circuit are considered.

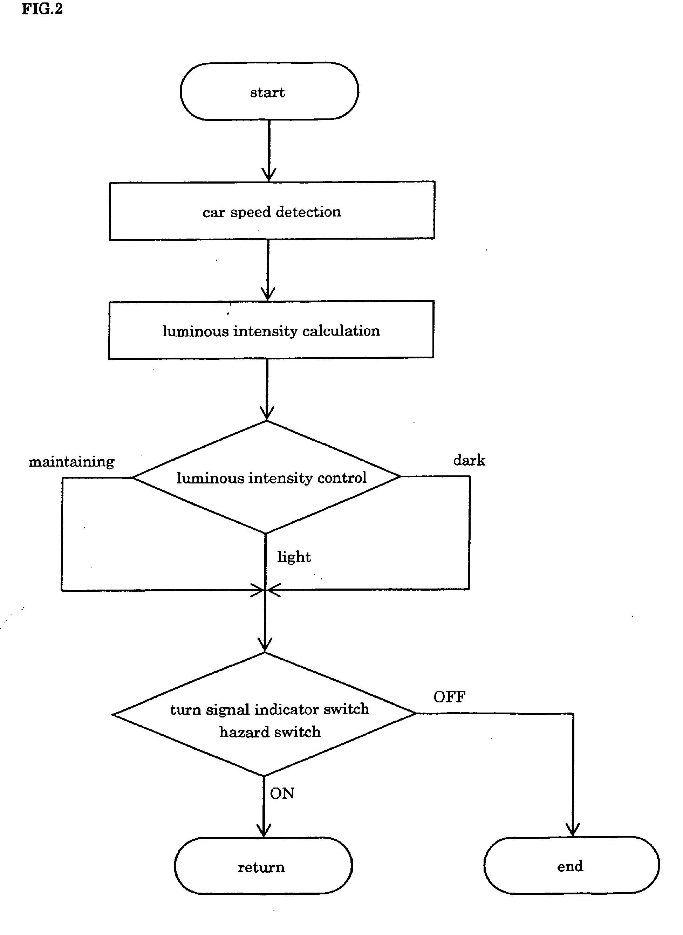

Fig. 2 is a flow chart showing a moving condition of the first mode of the turn signal indicator lamp system of this invention.

The turn signal indicator lamp system carries out blinking and hazard operation, and a blinking or a hazard switch is turned on for starting.

To begin with, the car speed detection unit 1 detects a car speed, which is then transmitted into the luminous intensity calculation unit 3, through which calculation is carried out by a program on the basis of the transmitted car speed to calculate luminous intensity of the turn signal indicator lamp R1.

The calculated luminous intensity is transmitted into the luminous intensity control unit 4, through which the luminous intensity of the turn signal indicator lamp R1 is carried out from the "present luminous intensity" into " bright", "dark" and "present condition" respectively.

Afterwards, in case the blinking or hazard switch is still "on", the operation goes back into the "start" to repeat the abovementioned operation, and when the blinking or hazard switch is "off", the abovementioned operation finishes.

As explained in the foregoing paragraph, the irradiated luminous intensity of the turn signal indicator lamp R1 of the first mode of operation is changed by the car speed of one's car so that it is possible to show one's lane and intention correctly and surely to the other cars, and it is most useful for the change of lane when overtaking.

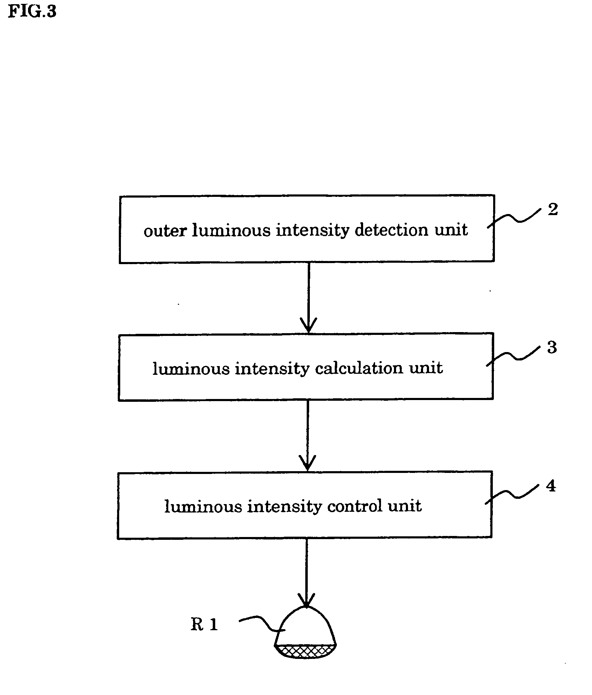

Fig. 3 is a block diagram of the second mode of the turn signal indicator lamp system.

The turn signal indicator lamp system comprises an outer luminous intensity detection unit 2 for detecting an outer luminous intensity around a car, a luminous intensity calculation unit 3 for calculating a luminous intensity of a turn signal indicator lamp R1 on the basis of an outer luminous intensity detected by the luminous intensity detection unit 2 and a luminous intensity control unit 4 for controlling an irradiated luminous intensity of the turn signal indicator lamp R1.

A photo-sensor in visible rays can be used for the outer luminous intensity detection unit 2.

It is characterized that one of the photo-sensors is a CdS cell, which is small, inexpensive and very sensitive to the visible ray, and whose resistant value changes by luminous energy given to a photoelectric surface.

In comparison to the other photo-sensors, which will be explained later, a response time of the CdS cell is several tens seconds which is a little slow than the other photo-sensors, but it can be used for the outer luminous intensity detection unit 2.

However, considering a follow-up mechanism that when the car enters a tunnel with the turn signal indicator lamp R1 "on", it is useful to use an expensive photo-diode as a photo sensor for converting photo-energy into electric energy or to use a photo-transistor having a several high times sensibility than the photo-transistor.

On the basis of the outer luminous intensity of the luminous detection unit 2 a luminous intensity calculation is carried out in a calculation circuit of the luminous intensity calculation unit 3 in order to obtain the given result. The program written in advance in the ROM carries out a method of calculation.

That is to say, when a luminous intensity of the turn signal indicator lamp R1 is controlled by the luminous intensity around the car, such instructions shown in the Tables 3 or 4, which are written in advance as a program, can be used.

It should be understood that these instructions shown in the Tables 3 or 4 are illustrative only, and the calculation method can be changed wishfully by a content of a program to be written in advance in the ROM.

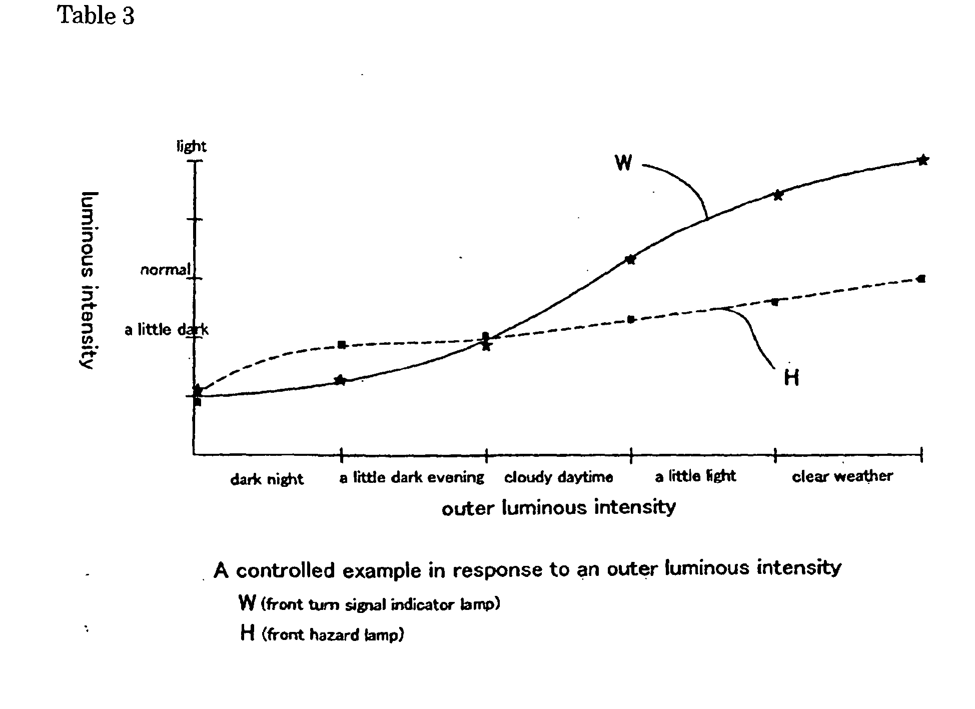

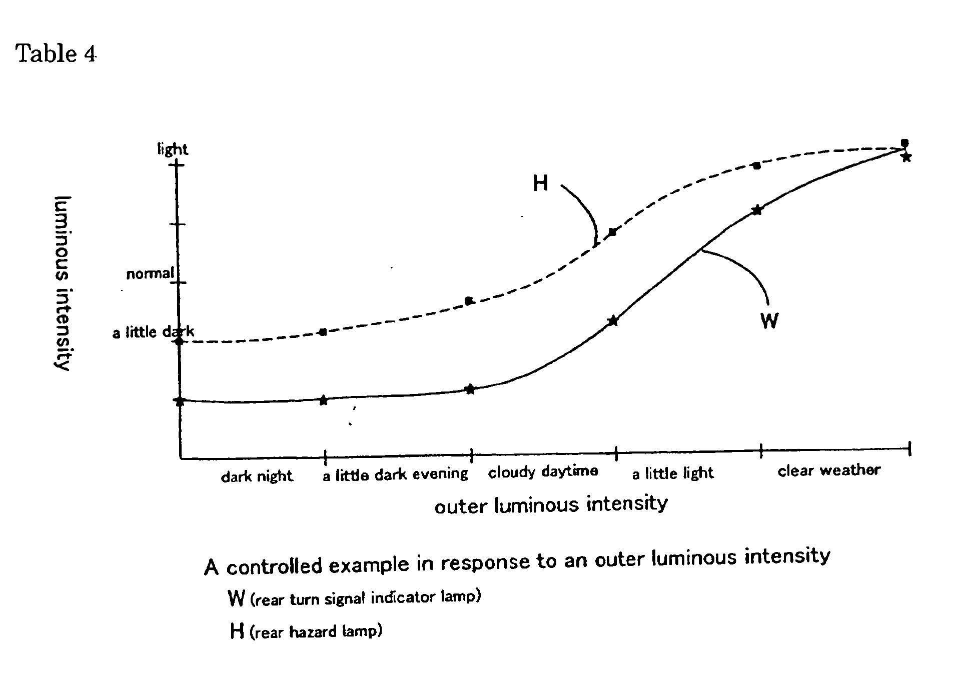

Similar to the first mode of the turn signal indicator lamp system, luminous intensity of the turn signal indicator lamp R1 is not calculated uniformly, but it is considered to make some differences each among the luminous intensity of the front, rear, right and left turn signal indicator lamps R1.

That is to say, it is possible to make a structure whereby not only an outer luminous intensity, but also an instruction of "on/off" operation for a wiper switch, a turn signal indicator lamp switch or a hazard warning switch and a signal for rainfall can be detected simultaneously which are made into a calculation instruction in the luminous intensity calculating unit 3.

With such a structure, it is possible to know the detailed outer condition which cannot be detected by the outer luminous intensity only so that a correct luminous intensity calculation in response to the more current condition can be carried out on the basis of the outer luminous intensity in the luminous calculation unit 3, thus enabling to calculate the luminous intensity for avoiding a possible danger when it is raining.

On the basis of the outer luminous intensity of the luminous intensity detection unit 2 a luminous intensity calculation is carried out in a calculation circuit of the luminous intensity calculating unit 3 in order to obtain the given result.

It should be understood that a structure of a luminous intensity control unit 4 is the same as that of the first mode of the turn signal indicator lamp system.

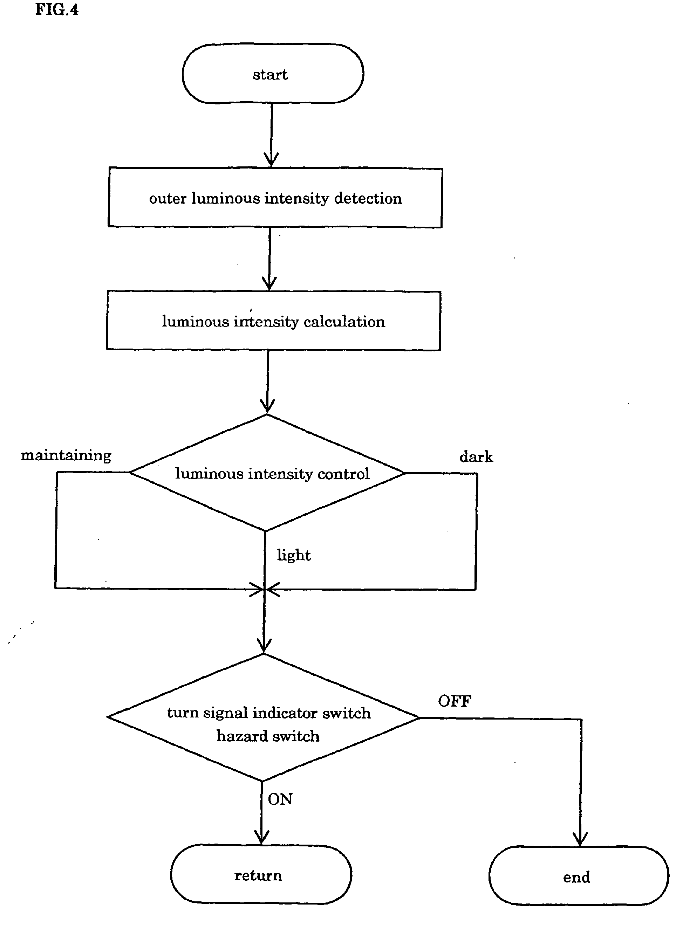

Fig. 4 is a flow chart showing a moving condition of the turn signal indicator lamp system of the second mode of operation. The turn signal indicator lamp system carries out blinking and hazard operations, and blinking or a hazard switch is turned on for starting.

To begin with, a luminous intensity around the car is detected by an outer luminous intensity detection unit 2. The outer luminous intensity is then transmitted into the luminous intensity calculation unit 3, through which a program on the basis of the transmitted luminous intensity to calculate a luminous intensity of the turn signal indicator lamp R1 carries out calculation.

The calculated luminous intensity is transmitted into the luminous intensity control unit 4, through which the luminous intensity of the turn signal indicator lamp R1 is carried from the "present luminous intensity" into " bright", "dark" and "present condition" respectively.

Afterwards, in case the blinking or hazard switch is still "on", the operation returns into the "start" to repeat the abovementioned operation, and when blinking a winker or a hazard switch is set into "off", the abovementioned operation finishes.

The turn signal indicator lamp system of the second mode of this invention makes it possible to show a lane and intention of one's car correctly and surely to the other cars by changing an irradiated luminous intensity of the turn signal indicator lamp R1, thus enabling to improve a visibility for the luminous intensity even under the strong rays of the sun.

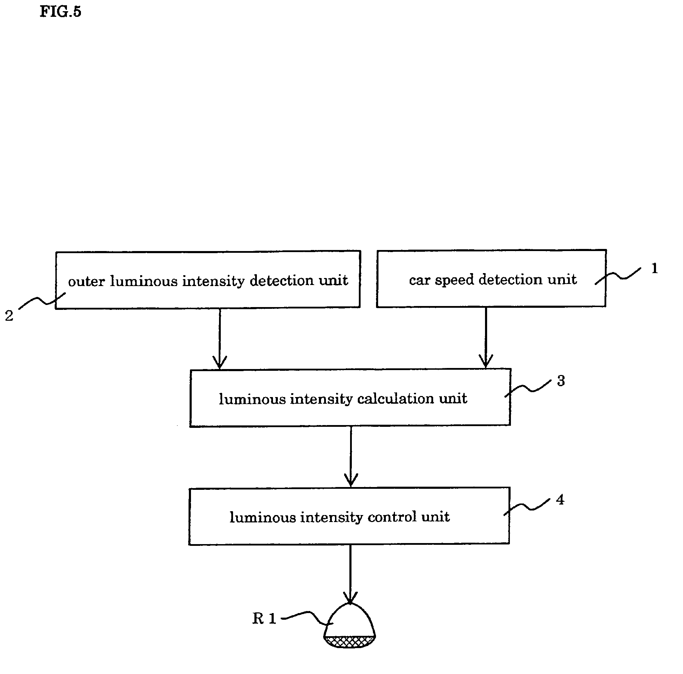

Fig. 5 is a block diagram showing the third mode of the turn signal indicator lamp system of this invention.

The turn signal indicator lamp of this invention comprises a car speed detection unit 1, an outer luminous intensity detection unit 2, a luminous intensity calculation unit 3 for detecting a luminous intensity of the turn signal indicator lamp R1 on the basis of the car speed detected by the car speed detection unit 1 and the outer luminous intensity detected by the outer luminous intensity detection unit 2 and a luminous intensity control unit 4 for controlling an irradiated luminous intensity of the turn signal indicator lamp R1 according to the luminous intensity detected by the luminous intensity d calculating unit 3.

The structure of the turn signal indicator lamp of this invention is the same as those of the aforementioned first and second modes which comprise the car speed detection unit 1, the outer luminous intensity detection unit 2, the luminous intensity calculating unit 3 and the luminous intensity control unit 4

However, when controlling the luminous intensity of the turn signal indicator lamp, the programs shown in the following Tables 5 to 8 are used.

It must be understood that the following tables are only illustrative, but the method of calculation can be changed by the content of the program written in the ROM and the like.

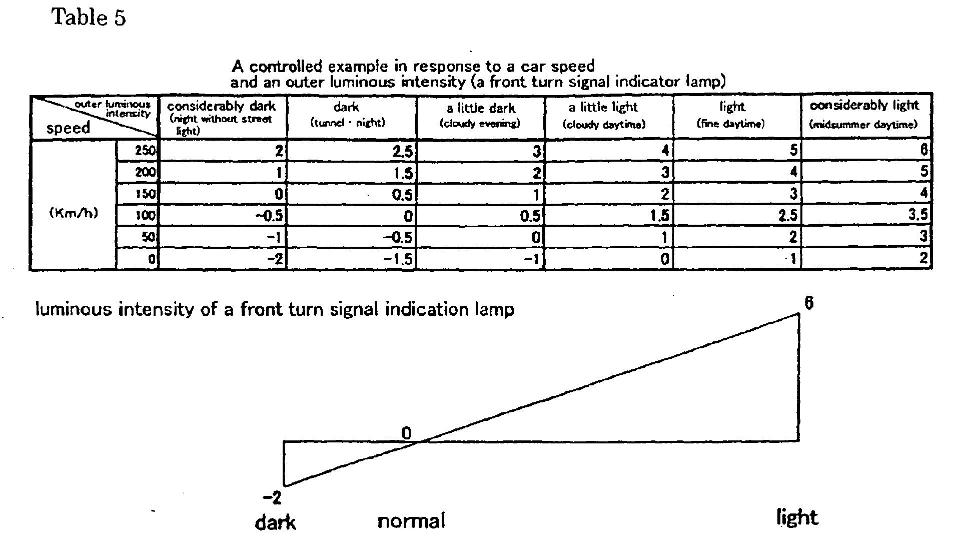

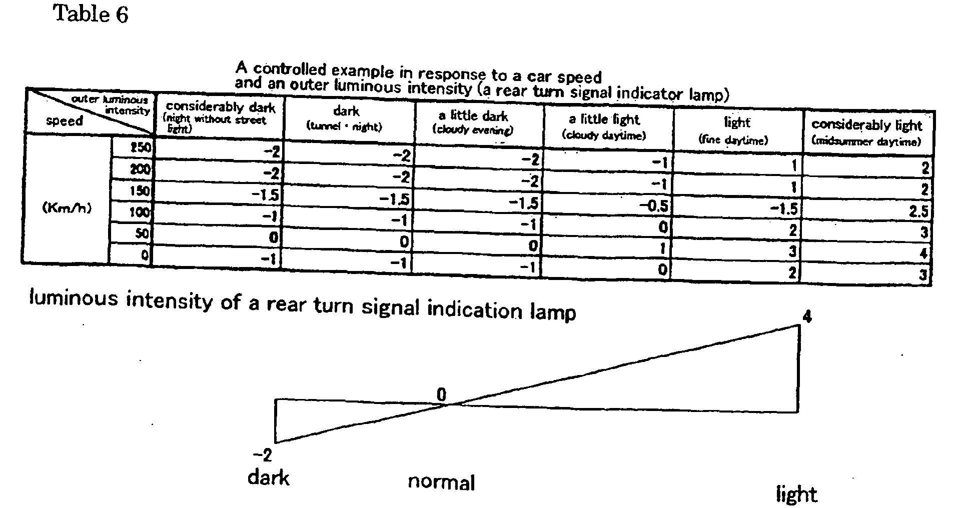

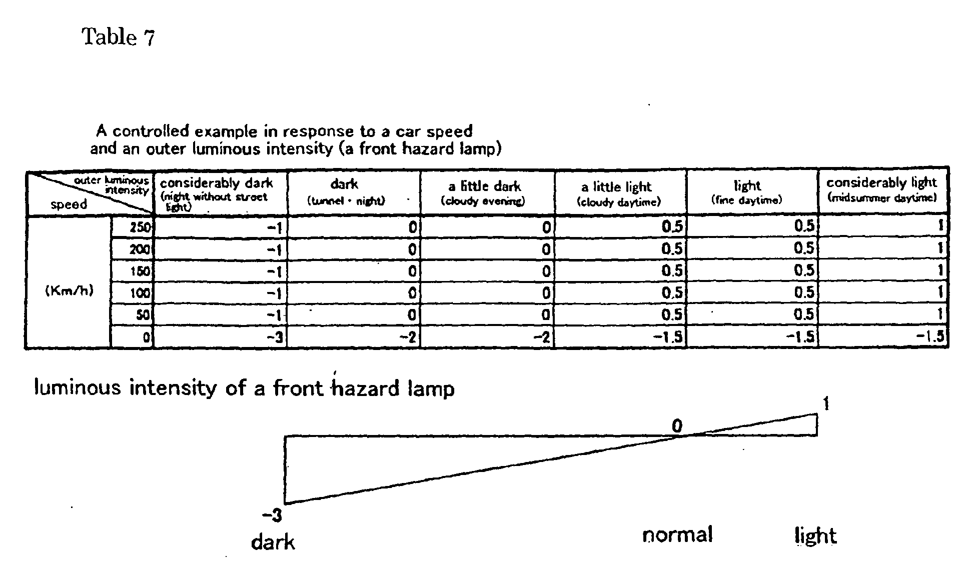

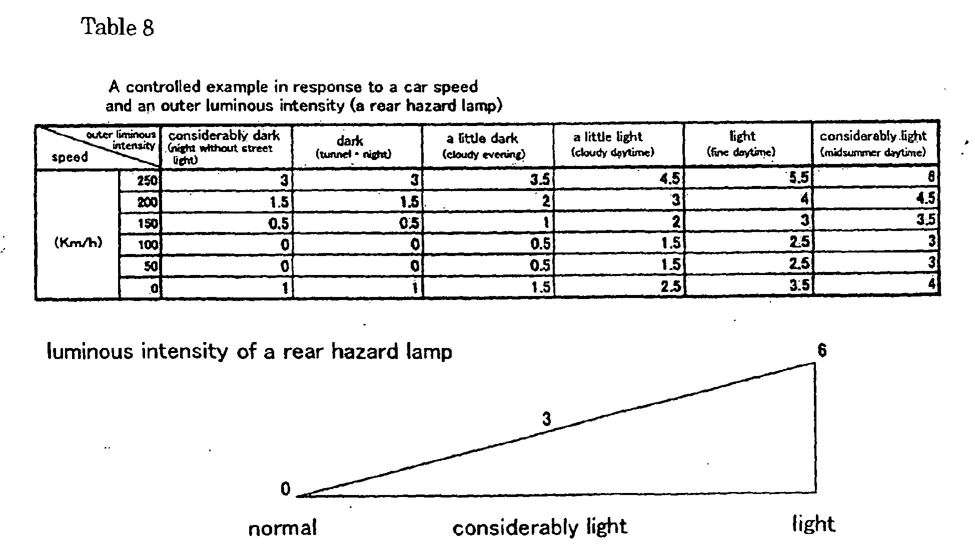

Similar to the first and second modes of the turn signal indicator lamp system, a luminous intensity of the turn signal indicator lamp R1 is not calculated uniformly, but it rear, right and left turn signal indicator lamps R1.

It is to be appreciated that not only detection of a car speed and an outer luminous intensity, but also the information such as a braking amount, an accelerating amount, an "on/off" operation of a wiper switch, a turn signal indicator lamp switch or a hazard lamp switch and a signal from a rainfall sensor can be detected simultaneously in the luminous intensity calculation unit 3.

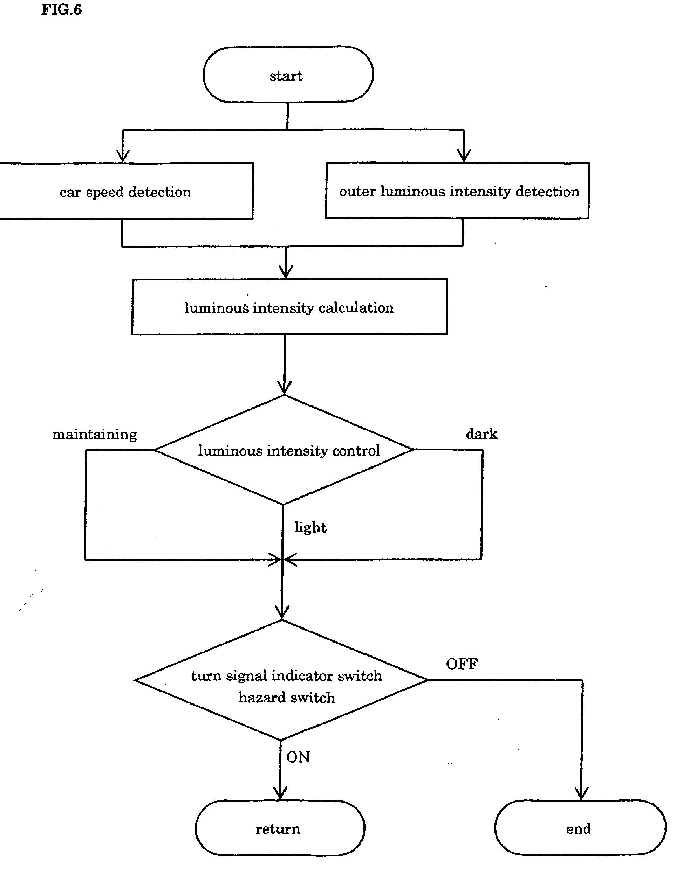

Fig. 6 is a flow chart showing a moving condition of the third mode turn signal indicator lamp and a luminous intensity of the turn signal indicator lamp and a luminous intensity of the third mode of the rear turn signal indicator lamp R1 is increased in order to make a luminous intensity difference. The turn signal indicator lamp system carries out blinking and hazard operation, and a blinking switch or a hazard switch is turned on for starting.

To begin with, an outer luminous intensity around the car is detected by an outer luminous intensity detection unit 2.

The outer luminous intensity is then transmitted into the luminous intensity calculation unit 3, through which calculation is carried out by a program on the basis o the transmitted outer luminous intensity to calculate a luminous intensity of the turn signal indicator lamp R1.

The car speed and the calculated luminous intensity are transmitted into the luminous intensity control unit 4, through which the luminous intensity of the turn signal indicator lamp R1 is shown from the "present luminous intensity" into " bright", "dark" and "present condition" respectively.

Afterwards, in case the blinking switch or hazard switch is still "on", the operation returns into the "start" to repeat the abovementioned operation, and when the blinking switch or hazard switch is set into "off", the abovementioned operation finishes.

In comparison to the turn signal indicator lamp system of the first and second modes of this invention, it is possible to carry out a more detailed control by the turn signal indicator lamp system of the third mode.

That is to say, it is possible to increase an irradiated luminous intensity of the turn signal indicator lamp as strong as possible under the strong daytime sunlight in order to show the intention of the car to the other cars correctly and surely during a high speed running and also to attract the attention of the other car drivers to the car.

In addition, under the outer luminous condition in which a normal visibility can be secured during a normal speed running, the life time of the turn signal indicator lamp can be extended under the normal luminous intensity.

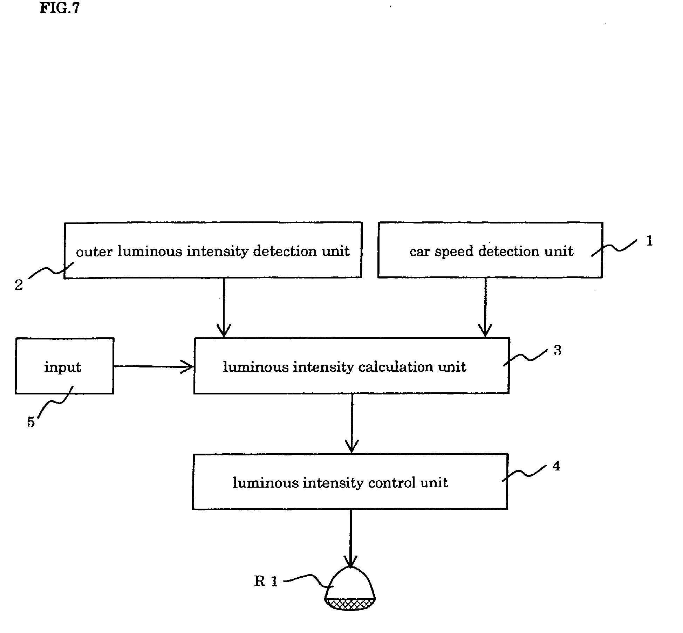

Fig. 7 is a block diagram of the turn signal indicator lamp of the fourth mode. The turn signal indicator lamp comprises a luminous calculation unit 3 of the first to third modes, which is provided with an input 5.

It should be understood that the input 5 is provided with the luminous calculation unit 3, which relates to the third mode of the turn signal indicator lamp.

The instruction, which is input from the input 5, becomes a calculation information for obtaining a luminous intensity of the turn signal indicator lamp R1 together with a car speed and/or the outer luminous detection unit 2.

The information, which is input from the input 5, are as an on/off information, a weather forecast such as rainfall or fog, a luminous intensity difference information of each front, rear, right and left turn signal indicator lamps R1 and also a cap and a lower limit of a luminous intensity. The other structure except the input 5 is substantially the same as those of the aforementioned first to third modes of the turn signal indicator lamp system.

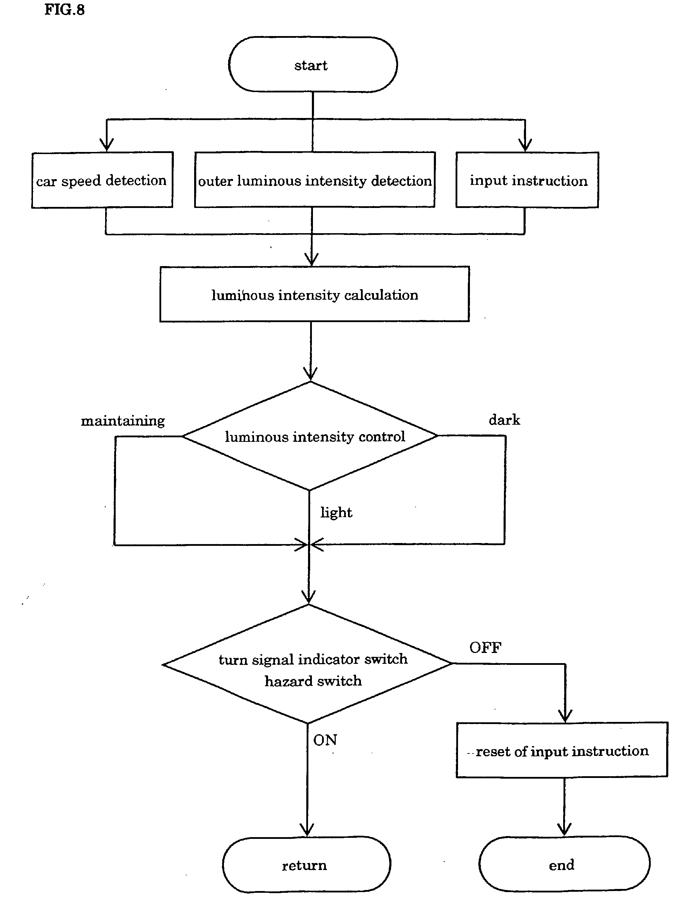

Fig. 8 is a flow chart showing a moving condition of the fourth mode of a turn signal indicator lamp system. This drawing shows that the input 5 is mounted with the luminous calculation unit 3 of the third mode. The turn signal indicator lamp system carries out blinking and hazard operation, and a blinking switch or a hazard switch is turned on for starting.

To begin with, the car speed-detection unit 1 detects a car speed, the luminous intensity around the car is detected by an outer luminous detection unit 2 and the car speed and the outer luminous intensity are transmitted into the calculating unit 3.

Then, the information from the input is transmitted into the luminous intensity calculation unit 3.

On the basis of the transmitted car speed, outer luminous intensity and input information, the luminous intensity calculation unit 3 carries out a calculation of the turn signal indicator lamp R1 by a program.

The calculated luminous intensity is transmitted into the luminous intensity control unit 4, through which the luminous intensity of the turn signal indicator lamp R1 is shown from "the present luminous intensity" into " bright", "dark" and "present condition" respectively.

Afterwards, in case the blinking switch or hazard switch is still "on", the operation returns into the "start" to repeat the abovementioned operation, and when the blinking switch or hazard switch is set into "off", the information input from the input 5 is reset to finish the abovementioned operation.

In accordance with the turn signal indicator lamp system of the fourth mode, it becomes possible to make a more detailed control than that of the first to third modes.

That is to say, not only the running condition such as a car speed and an outer luminous intensity, but also inputting a driver's intention from the input 5 can be reflected directly to the system so that it becomes possible to show the intention of the car to the other cars correctly and surely during a high speed running and also to attract the attention of the other car drivers to the car.

In addition, an "off" instruction for the system from the input 5 and also an "off" instruction for a power supply of the unnecessary lamp of the turn signal indicator lamp R1 can stop driving the unnecessary system and lighting of the lamp R1 in order to improve energy saving and extending the life time of the lamps.

The brake lamp system for a car of this invention is explained.

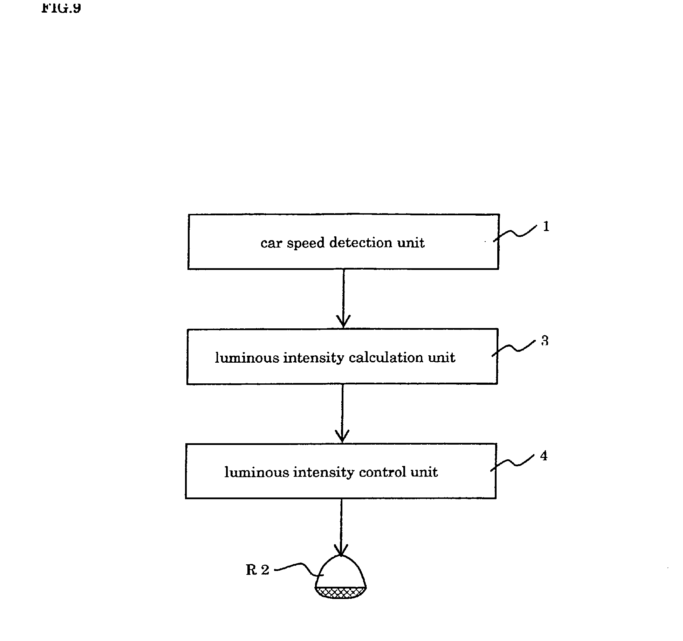

Fig. 9 is a block diagram of the first mode of the brake lamp system for a car of this invention.

The brake lamp system comprises a car speed detection unit 1, an outer luminous intensity detection unit 2, a luminous intensity calculation unit 3 for detecting a luminous intensity of the turn signal indicator lamp R1 on the basis of the car speed detected by the car speed detection unit 1 and a luminous intensity control unit 4 for controlling an irradiated luminous intensity of the turn signal indicator lamp R2 according to the luminous intensity of the luminous intensity calculation unit 3.

The structure of the car speed detection unit 1 is the same as the turn signal indicator lamp system.

On the basis of the car speed detected by the car speed detection unit 1, a calculation of the luminous intensity is carried out in a calculating circuit of the luminous intensity calculation unit 3. A program written in the ROM in advance disposes a method of calculation and the like.

That is to say, when a luminous intensity of the brake lamp R2 is controlled by a car speed such as an instruction shown in the Table 9, which is written in advance as a program can be used.

It should be understood that the instruction shown in the following is illustrative only, and the calculation method can be changed wishfully by a content of a program to be written in advance in the ROM.

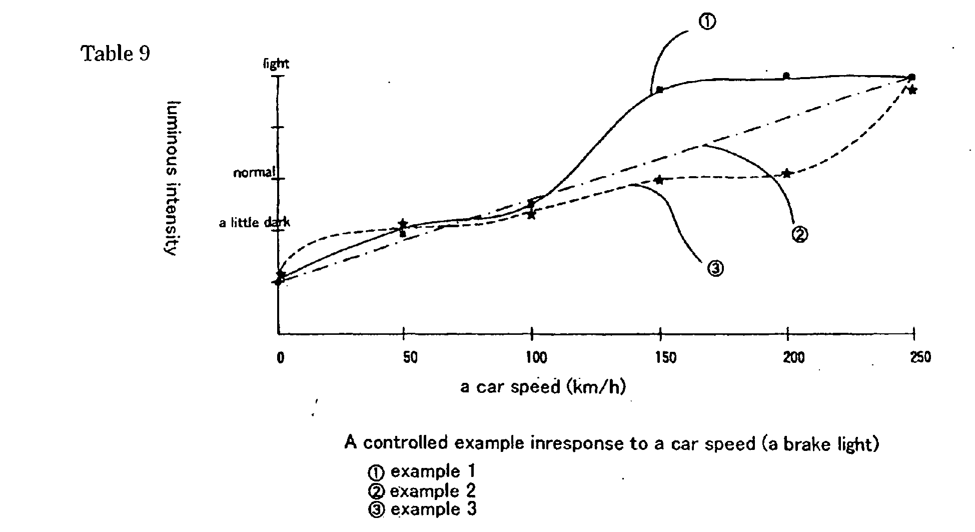

Not only the running condition such as a car speed and a braked amount, but also the instruction of an "on/off " instruction of the turn signal indicator lamp and the hazard lamp switch are detected simultaneously..

In addition, not only a car speed but also a car speed change amount per hour can be detected to obtain a calculating instruction in the luminous calculation unit 3, and a calculating structure of the luminous calculation unit 3 is the same as the turn signal indicator lamp system.

The luminous control unit 4 controls an electric supply into the brake lamp R2, and its structure is not limited to the specified one.

For example, a variable resistor for the luminous intensity control unit is connected in series in the power supply, a variable control for changing an electric voltage in response to a luminous intensity instruction from the aforementioned calculation circuit and another relay control from the power supply circuit can be considered.

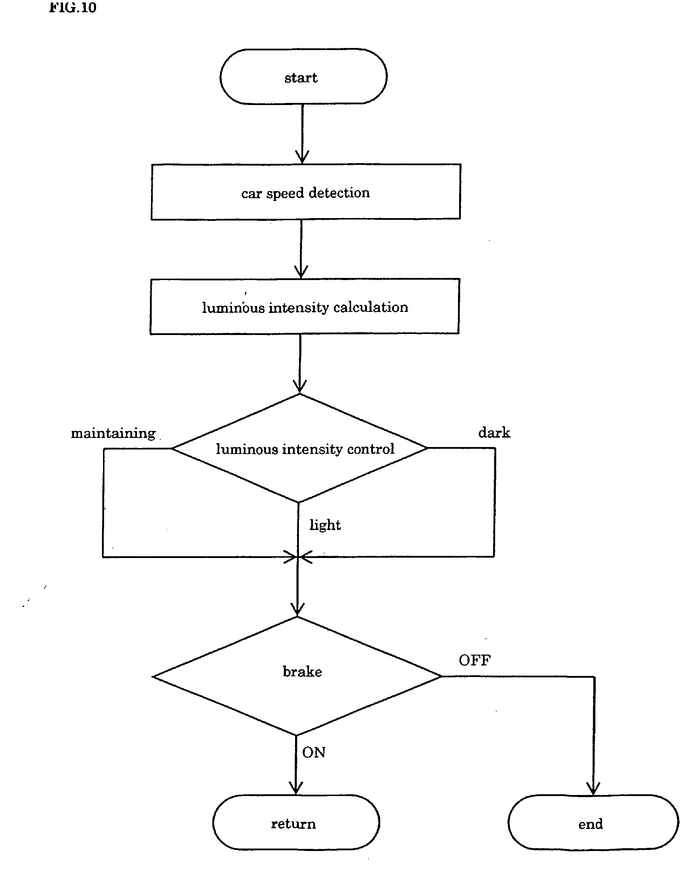

Fig. 10 is a flow chart showing a moving condition of the brake lamp system for a car of the first mode of this invention.

The brake lamp system is driven to start by a braked pedal. To begin with, the car speed detection unit 1 detects a car speed. The detected car speed is transmitted to the luminous intensity calculation unit 3, through which a program on the basis of the transmitted car speed carries out the luminous intensity calculation in order to calculate a luminous intensity of the brake lamp R2.

The calculated luminous intensity is transmitted into the luminous intensity control unit 4, through which the luminous intensity of the turn signal indicator lamp R2 is shown from "the present luminous intensity" into " bright", "dark" and "present condition" respectively.

Afterwards, in case the braking switch is still "on", the operation returns into the "start" to repeat the abovementioned operation, and when the braking is "off", the operation finishes.

In accordance with the brake lamp system of the first mode, an irradiated luminous intensity of one's car is changed by the car speed in order to show the intention of the car to the other cars correctly and surely and also to display a remarkable effect in braking.

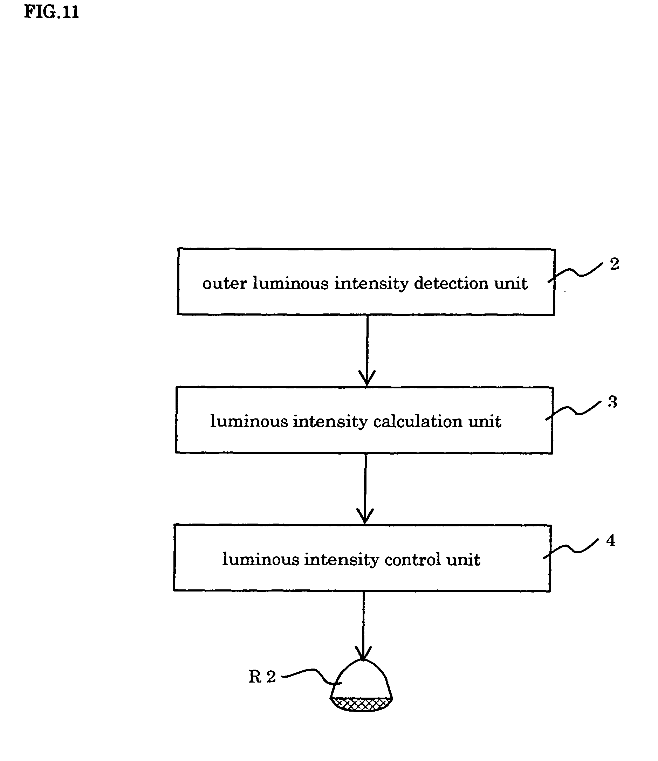

Fig. 11 is a block diagram of the brake lamp system of the second mode. The brake lamp system comprises a car speed detection unit 1, an outer luminous intensity detection unit 2, a luminous intensity calculation unit 3 for detecting a luminous intensity of the turn signal indicator lamp R2 on the basis of the car speed detected by the car speed detection unit 1 and a luminous intensity control unit 4 for controlling an irradiated luminous intensity of the turn signal indicator lamp R2 according to the luminous intensity of the luminous intensity calculation unit 3.

The structure of the car speed detection unit 2 is the same as the turn signal indicator lamp system.

On the basis of the outer luminous intensity detected by the outer luminous intensity detection unit 2, a calculation of the luminous intensity is carried out in a calculating circuit of the luminous intensity calculation unit 3 to detect the desired effect. A program written in the ROM in advance disposes a method of calculation and the like.

That is to say, when a luminous intensity of the brake lamp R2 is controlled by a car speed such as an instructions shown in the Table 10, which is written in advance as a program can be used.

It should be understood that the instruction shown in the following is illustrative only, and the calculation method can be changed wishfully by a content of a program to be written in advance in the ROM.

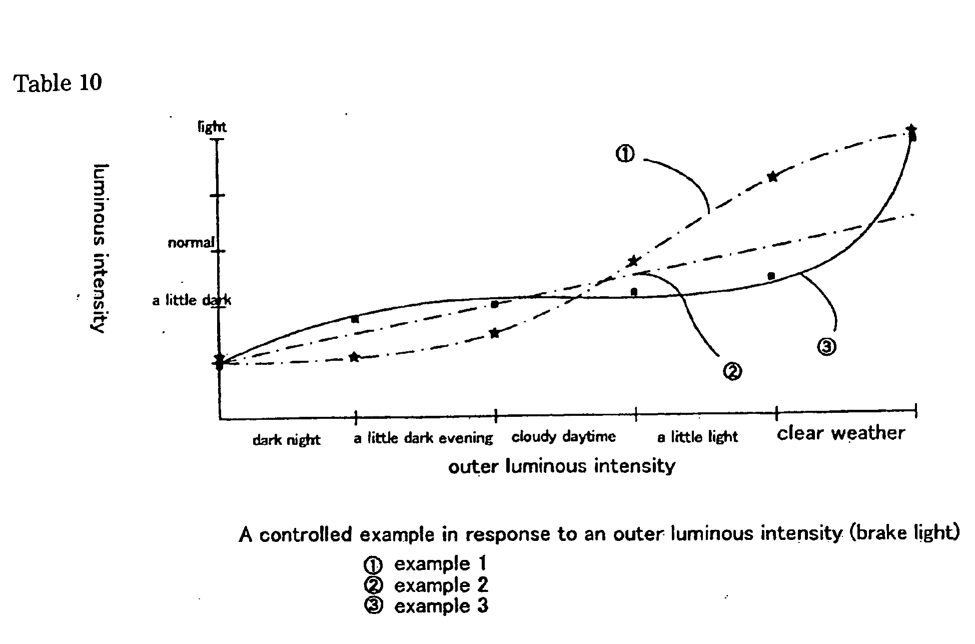

Not only the outer luminous intensity but also the other condition such as an "on/off" instruction of the wiper switch, the turn signal indicator lamp and the hazard lamp and a weather forecast can be detected simultaneously, which is the same as the turn signal indicator lamp system.

The luminous intensity control unit 4 is the same as the first mode of this invention.

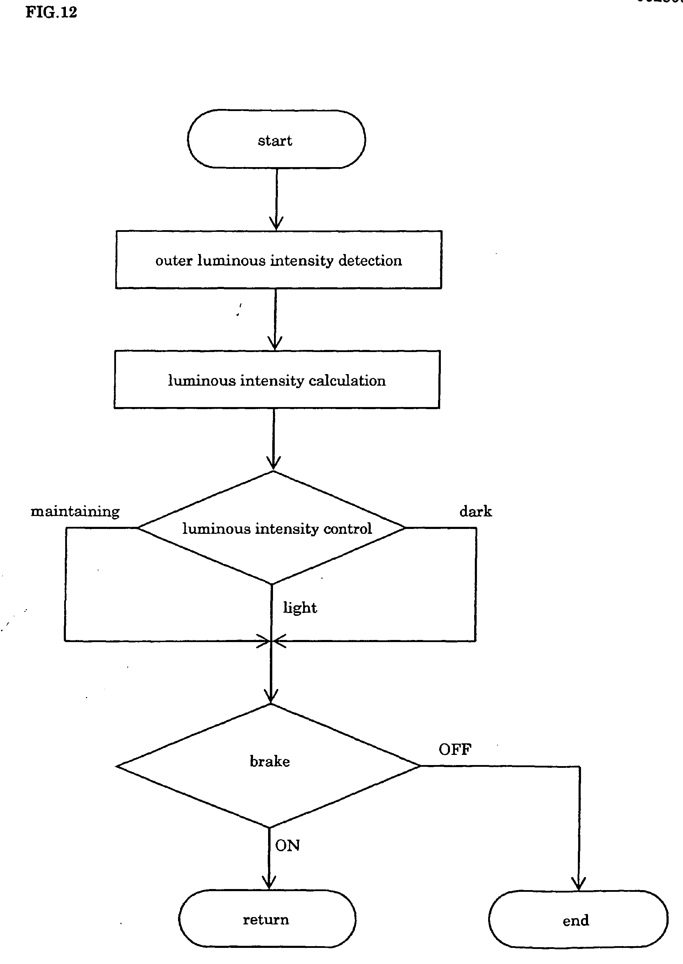

Fig. 12 is a flow chart showing a moving condition of the brake lamp system of the second mode. The brake lamp system is driven to start by a braked pedal. Tb begin with, the car speed detection unit 1 detects a car speed. The detected car speed is transmitted to the luminous intensity calculating unit 3, through which a program on the basis of the transmitted car speed carries out the luminous intensity calculation in order to calculate luminous intensity of the brake lamp R2.

The calculated luminous intensity is transmitted into the luminous intensity control unit 4, through which the luminous intensity of the brake lamp R2 is shown from the "present luminous intensity" into "bright", "dark" and "present condition" respectively.

Afterwards, in case the braking switch is still "on", the operation returns into the "start" to repeat the abovementioned operation, and when the braking is "off", the operation finishes.

In accordance with the brake lamp system of the second mode, an irradiated luminous intensity of one's car is changed by the car speed in order to show the intention of the car to the other cars correctly and surely and also to display a remarkable effect for braking. In addition, it is very useful to improve a decreased visibility of light of the brake lamp R2 under the strong daytime sunlight.

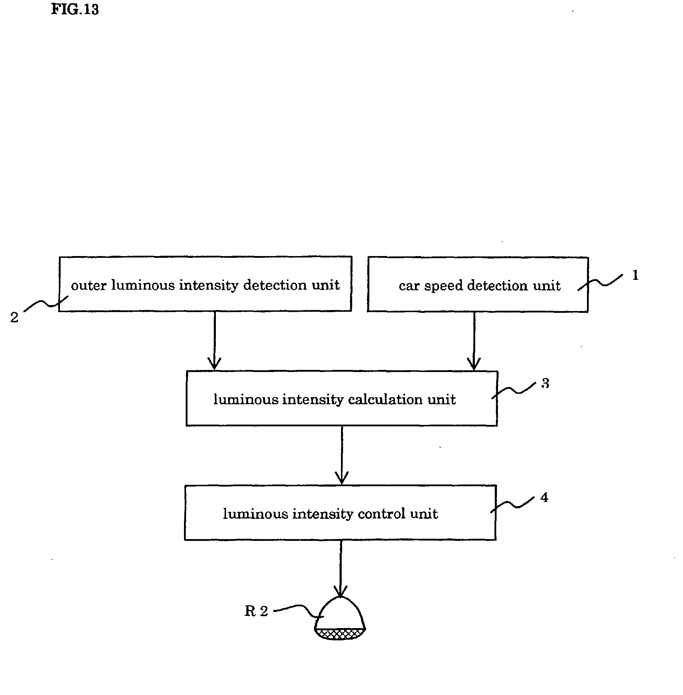

Fig. 13 is a block diagram of the brake lamp system of the third mode. The brake lamp system comprises a car speed detection unit 1, an outer luminous intensity detection unit 2 for detecting a luminous intensity a round the car, a luminous intensity calculation unit 3 for calculating the luminous intensity of a brake lamp R2 on the basis of the car speed detected by the car speed detection unit 1 and the outer luminous intensity detected by the outer luminous intensity detection unit 2 and a luminous intensity control unit 4 for controlling an irradiated luminous intensity of the brake lamp R2 calculated by the luminous intensity calculation unit 3.

Similar to the brake lamp system of the first and third modes, the structures of the car speed detection unit 1, the outer luminous intensity detection unit 2, the luminous intensity calculation unit 3 and the luminous control unit 4 are the same a s those of the brake lamp system.

However, when a luminous intensity of the brake lamp R2 is controlled, an instruction shown in the Table 11, which is written in advance in the ROM as a program, can be used.

It should be understood that the instruction shown in the following table is illustrative only, and the calculation method can be changed wishfully by a content of a program.

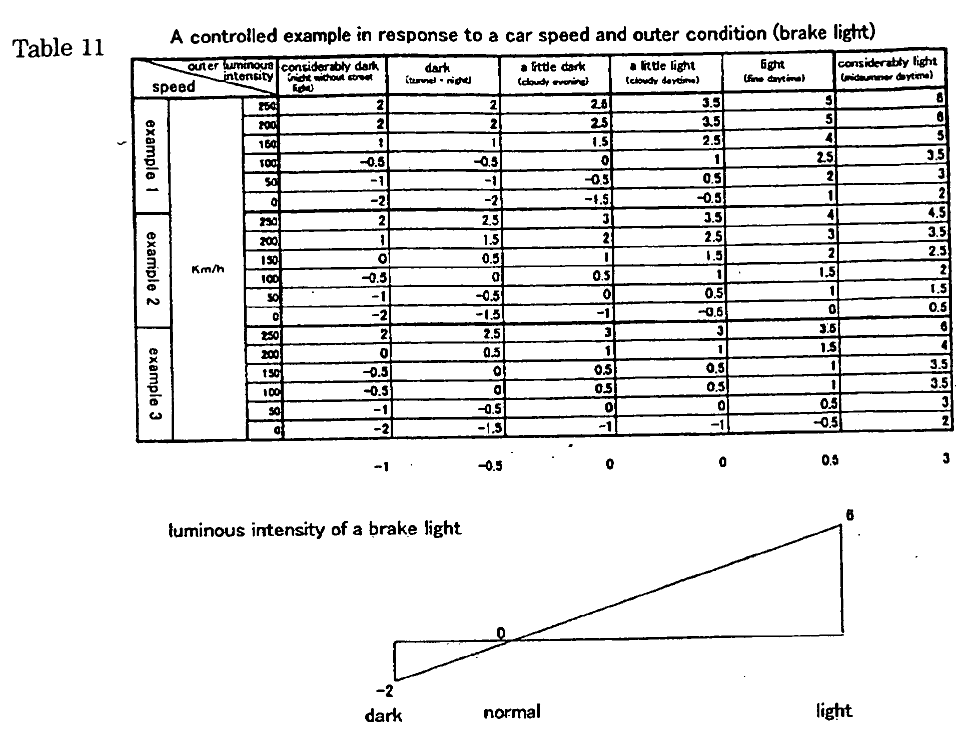

Not only the running condition such as a car speed and a braked amount, but also the instruction of an "on/off " instruction of the turn signal indicator lamp switch, the hazard lamp switch and a signal from the rainfall signal are detected simultaneously to have a calculation instruction in the luminous intensity calculation unit 3.

In addition, not only a car speed but also a car speed change amount per hour can be detected to obtain a calculating instruction in the luminous intensity calculation unit 3, and a calculating structure of the luminous intensity calculation unit 3 is the same as the turn signal indicator lamp system.

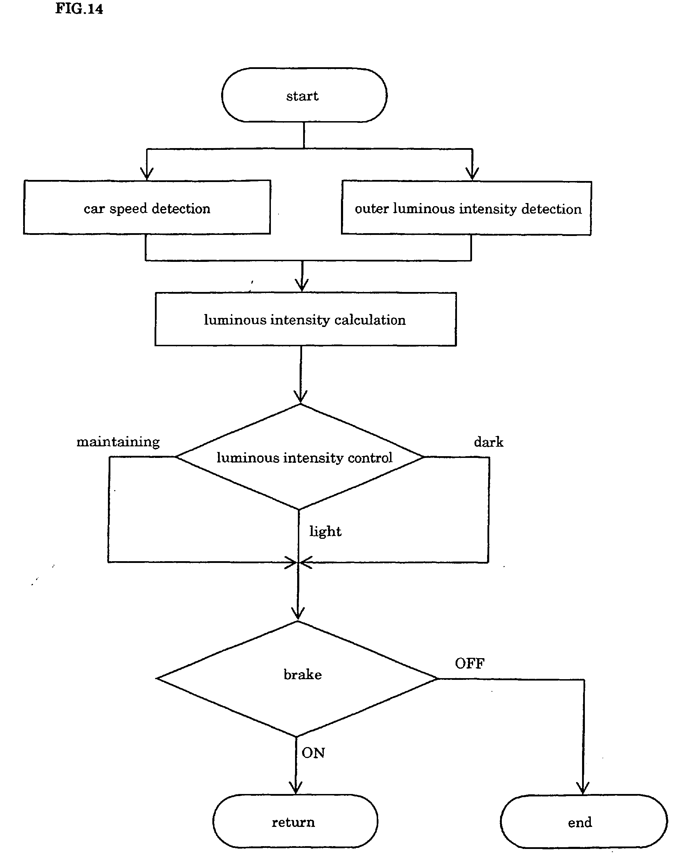

Fig.14 is a flow chart showing a moving condition of the brake lamp system for a car of the third mode of this invention.

The brake lamp system is driven to start by a braked pedal. To begin with, the car speed detection unit 1 detects a car speed and an outer luminous intensity around the car is detected by the outer luminous intensity detection unit 2.

The detected car speed and the outer luminous intensity are transmitted into the luminous intensity calculation control unit 3, through which calculation is carried out to calculate luminous intensity of the brake lamp R2 by a program on the basis of the car speed and the outer luminous intensity.

The calculated luminous intensity is transmitted into a luminous intensity control unit 4, through which the luminous intensity of the brake lamp R2 is shown from the "present luminous intensity" into "bright", "dark" and "present condition" respectively.

Afterwards, in case the blinking switch or hazard switch is still "on", the operation goes back into the "start" to repeat the abovementioned operation, and when the blinking switch or hazard switch is set into "off", the instruction input from the input 5 is reset to finish the abovementioned operation.

In accordance with the brake lamp system of the third mode, it is possible to carry out a more detailed controlling than the first and second modes of this invention.

Just before stopping and under the strong daytime sunlight, it is possible to make an irradiated luminous intensity of the brake lamp R2 as high as possible, thus enabling to show the intention of one's car to the other cars correctly and surely and also to attract attention of the other cars to the one's car.

During the initial slowdown in the normal running, in which a visibility can be secured in the outer luminous intensity, a normal luminous intensity is maintained to extend a life time of the brake lamp R2.

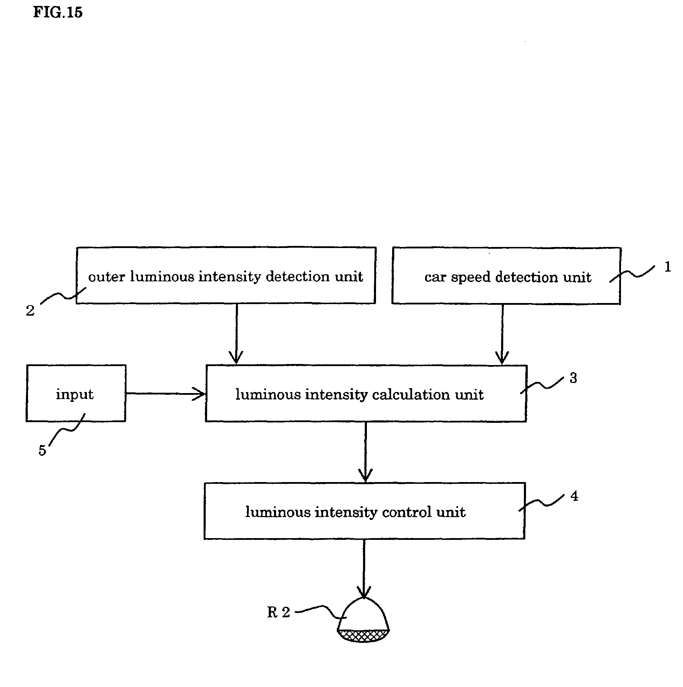

Fig. 15 is a block diagram of the brake lamp system of the fourth mode of this invention. An input 5 is provided at the luminous calculation unit 3 of the first to third modes. It is shown in the drawing that the input 5 is provided at the luminous calculation unit 3 of the third mode.

The information inputted from the input 5, the car speed detected by the car speed detection unit 1 and/or the outer luminous intensity is detected by the outer luminous intensity detection unit 2 will be the calculation instruction for calculating the luminous intensity in the luminous calculation unit 3 of the brake lamp R2.

The various pieces of instruction inputted from the input 5 are for example an "on/off" instruction for the brake lamp system, a weather forecast such as a rainfall or fog, an instruction for changing luminous intensity of the brake lamp R2 and upper and lower limit information of luminous intensity of the brake lamp R2. The structure of the brake lamp system is substantially the same as those of the first to third modes except mounting the input 5.

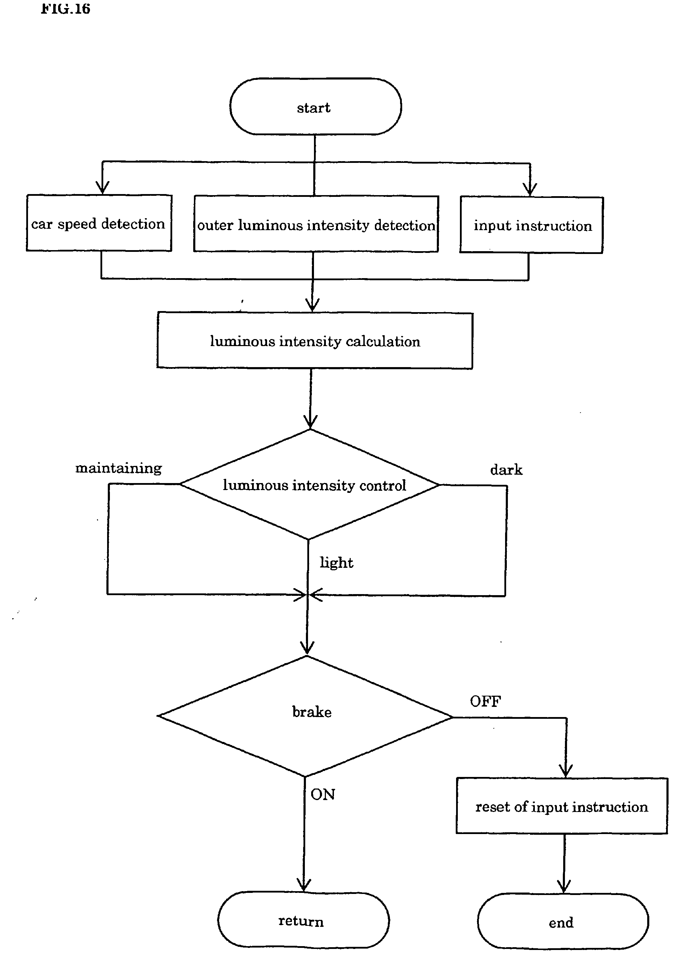

Fig. 16 is a flow chart showing a moving condition of the brake lamp system for a car of the fourth mode. This drawing shows that an input 5 is provided at the luminous intensity calculation unit 3.

The brake lamp system is driven to start by a braked pedal. To begin with, the car speed detection unit 1 detects a car speed and the outer luminous intensity detection unit 2 detects an outer luminous intensity around the car.

The detected car speed and the outer luminous intensity are transmitted into the luminous intensity unit 3, through which calculation is carried out to calculate luminous intensity of the brake lamp R2 by a program on the basis of the car speed and the outer luminous intensity.

The instruction from the output 5 is transmitted into the luminous intensity calculation unit 3, through which a calculation is carried out to detect a luminous intensity of the brake lamp R2 by a program on the basis of the car speed, outer luminous intensity and inputted instruction.

The calculated luminous intensity is transmitted into a luminous intensity control unit 4, through which the present luminous intensity such as "bright", "dark" and "present condition" can be obtained.

Afterwards, in case the brake is still "on", the operation returns into the "start" to repeat the abovementioned operation, and the information input from the input 5 is reset to finish the abovementioned operation.

In accordance with the brake lamp system of the fourth mode, it becomes possible to make a more detailed control than that of the first to third modes.

That is to say, not only the running conditions such as a car speed and an outer luminous intensity, but also inputting a driver's intention from the input 5 can be reflected directly to the system so that it becomes possible to show the intention of the car to the other cars correctly and surely during a high speed running and also to attract attention of the other car drivers to the car.

In addition, an "off" instruction for the system from the input 5 and an "off" instruction for changing the luminous intensity of the turn signal indicator lamp R2 can stop driving the unnecessary system and lighting of the brake lamp R2 in order to improve energy saving and to extend the life time of the lamps.

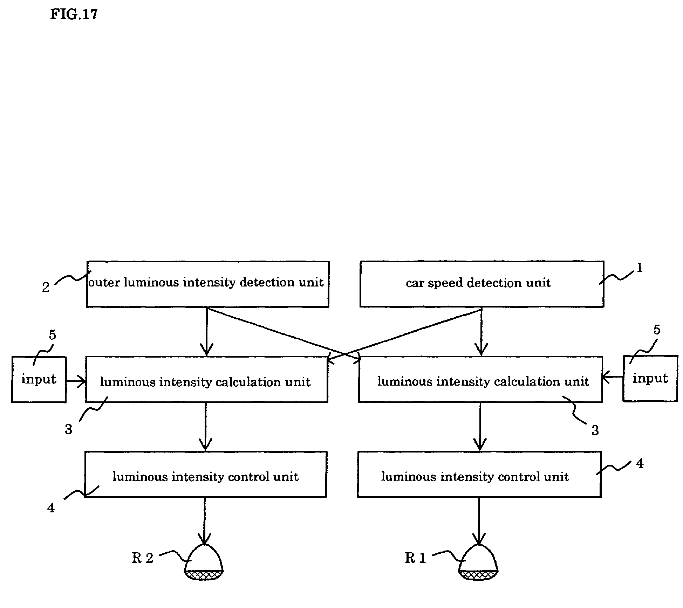

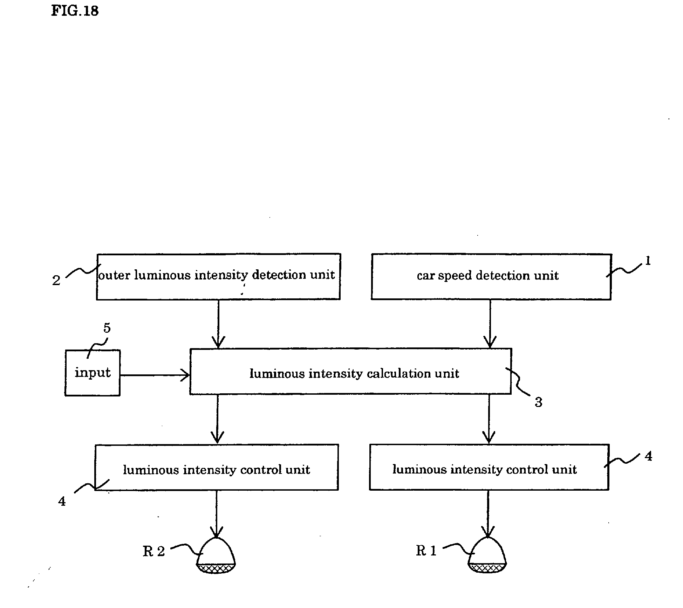

The brake light system for a turn signal indicator lamp of this invention will be explained. Figs.17 and 18 are the block diagrams of the mode of the brake light system for the turn signal indicator lamp.

The brake light system for the turn signal indicator lamp is a combination of either of the mode of the turn signal indicator lamp system and also of either of the mode of the brake light system car.

Namely, the turn signal indicator lamp and the brake light system comprise four modes respectively, totaling up to sixteen modes. For the sake of convenience, however, the car speed detection unit 1 and the outer luminous intensity detection unit 2 share the same structure of the turn signal indicator lamp system and the brake light system.

In addition, it can be appreciated that the luminous control unit 4 and the input 5 share the same structure of the turn signal indicator lamp system and the brake light system.

For the luminous control unit 4, it is preferable to provide the turn signal indicator lamp system and the brake light system separately.

Fig. 17 shows an example, which comprises a turn signal indicator lamp system of the third mode, a brake light system of the third mode, and the luminous control unit 4 and the input 5 which are provided separately.

Fig. 18 shows an example, which comprises a turn signal indicator lamp system of the third mode, a brake light system of the third mode, and the luminous control unit 4 and the input 5, which are provided separately to share the same structure of the turn signal indicator lamp system and the brake light system.

The brake lamp system, which comprises a car speed detection unit 1, an outer luminous intensity detection unit 2, a luminous intensity calculation unit 3, a luminous control unit 4 and an input 5, is substantially the same as those of the aforementioned modes.

A program for controlling a luminous intensity of the turn signal indicator lamp R1 and the brake lamp R2 is a set of instructions shown in Tables 1 to 11 which are written in advance in the ROM.

It should be understood that a set of instructions shown in these Tables are illustrative only, and a calculating method can be changed by a content of the program which is to be written in the ROM.

Not only the running condition such as a car speed and a braked amount, but also the instruction of an "on/off " instruction of the turn signal indicator lamp switch, the hazard lamp switch and a signal from the rainfall signal are detected simultaneously to have a calculation instruction in the luminous calculation unit 3.

In addition, not only a car speed but also a car speed change amount per hour can be detected to obtain a calculation instruction in the luminous calculating unit 3, and a calculation structure of the luminous intensity calculation unit 2 is the same as the turn signal indicator lamp system.

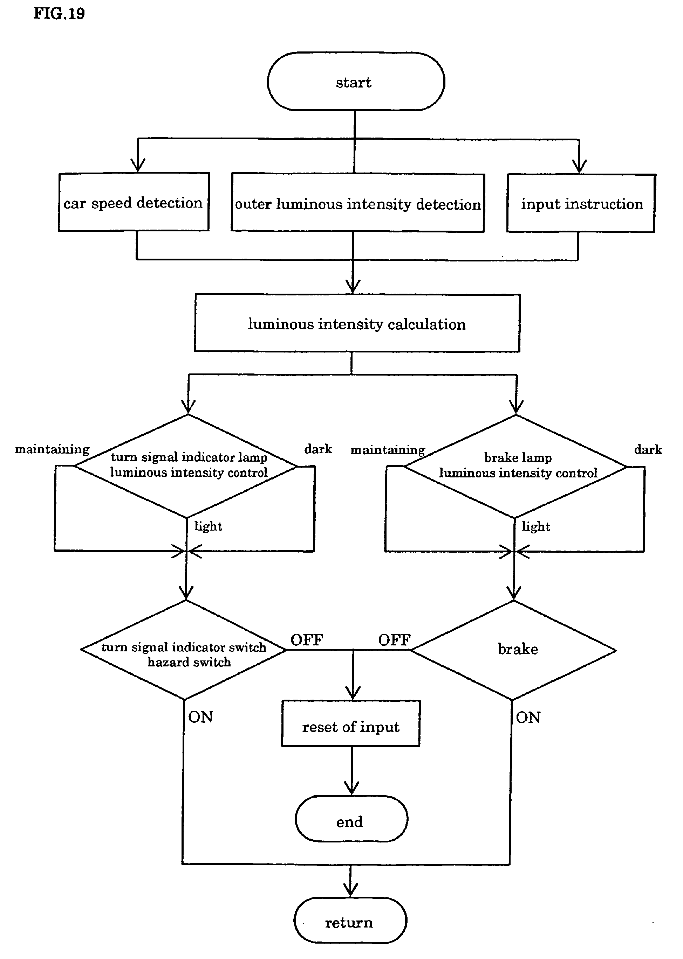

Fig. 19 is a flow chart showing a moving condition of the third mode a brake lamp system for a car. It should be understood that the turn signal indicator lamp of the third mode and the brake light system of the third mode could be combined together to share the structure of the luminous calculating unit 3 and the input 5.

The brake lamp system is driven to start by an "on" instruction of either of a turn signal indicator lamp switch, a hazard lamp switch or a brake lamp switch.

To begin with, a car speed detected by the car speed detection unit 1, and then the outer luminous intensity calculation unit 2 detects an outer luminous intensity around the car. The detected car speed and the outer luminous intensity are transmitted into the luminous control unit 3, through which calculation is carried out to calculate a luminous intensity of the turn signal indicator lamp R1 and the brake lamp R2 by a program on the basis of the car speed and the outer luminous intensity.

The calculated luminous intensities are transmitted into a luminous control unit 4 respectively, through which the luminous intensities of the turn signal indicator lamp R1 and the brake lamp R2 are calculated to show their luminous intensities from the "present luminous intensity" into "bright", "dark" and "present condition" respectively.

It is needless to say that a luminous control is not carried out for the not "on" turn signal indicator lamp R1 and the brake lamp R2.

Afterwards, in case at least one of the turn signal indicator lamp switch or the hazard lamp switch is still "on", the operation goes back into the "start" to repeat the abovementioned operation, and when the turn signal indicator lamp switch and the hazard lamp switch turned into "on", the abovementioned operation finishes.

In accordance with the aforementioned brake lamp system for the car, it becomes possible to show a clear intention of the car correctly and also to make a precise control than the conventional method of controlling the turn signal indicator lamp system or the brake lamp system separately.

In other words, synergism of an effect of the turn signal indicator lamp system and of the brake lamp system makes it possible to show a clear intention of the car to the other cars correctly and surely and also to attract attention of the other cars to the car. It is also possible to make energy saving and extend the life of the lamps.

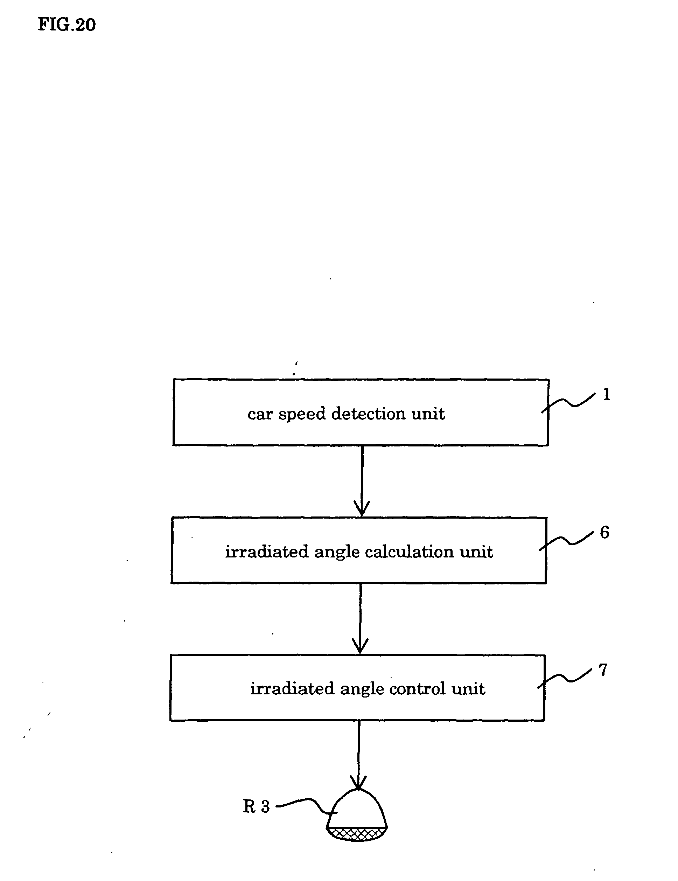

A headlight system for a car will be explained in the following paragraphs. Fig. 20 is a block diagram of the first mode of the headlight system. The headlight system comprises a car speed detection unit 1, an irradiated angle calculating unit 6 for an irradiated angle of a headlight R3 on the basis of the car speed detected by the car speed detection unit 1 and an irradiated angle control unit 7 for controlling an irradiated angle calculated by the irradiated angle calculating unit 6 around the car is detected by the outer luminous intensity detection unit 2.

A structure of the car speed detection unit 1 is substantially the same as those of the turn signal indicator lamp system and of the brake lamp system.

Similar to the first and second modes of the turn signal indicator lamp system, a luminous intensity of the turn signal indicator lamp R1 is not calculated uniformly, but it is possible to calculate the luminous intensity of the back and forth, right and left turn signal indicator lamps R1 by differentiating the luminous intensity of these turn signal indicator lamps R1. It is to be appreciated that not only detection of a car speed and an outer luminous intensity, but also the information such as a braking amount, an accelerating amount, an "on/off" operation of a wiper switch, a turn signal indicator lamp switch or a hazard lamp switch and a signal from a rainfall sensor can be detected simultaneously by the luminous intensity calculation unit 3.

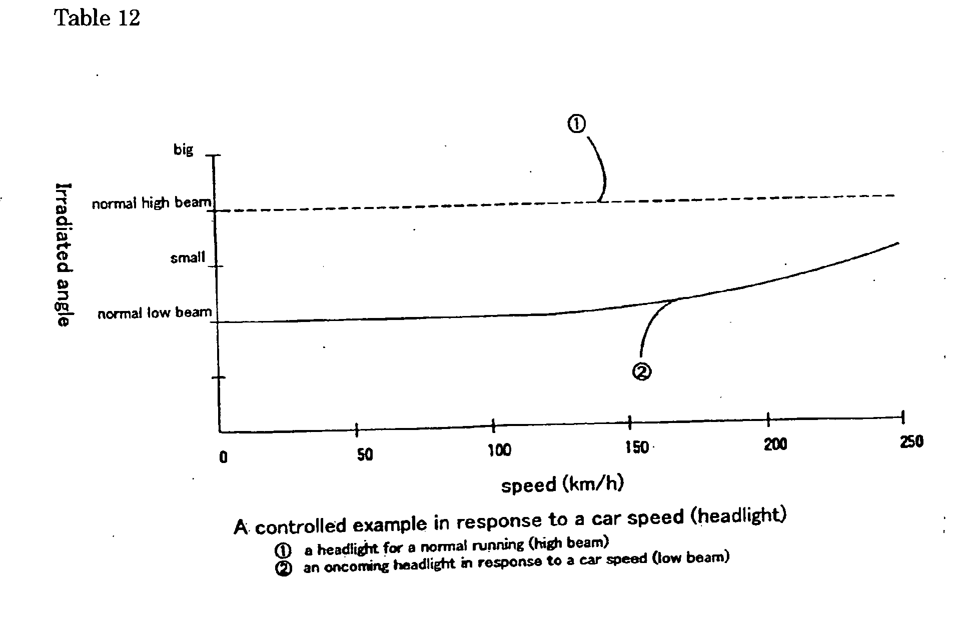

**Table 13**

| example of controlled result in response to car speed | car speed | | | | | | |
|---|---|---|---|---|---|---|---|
| | stop (0km/h) | normal (30∼60km/h) | high speed (60∼100km/h) | high speed I (100∼120km/h) | high speed (120∼150km/h) | high speed (150∼200km/h) | high speed (200km/h∼) |
| normal oncoming headlight (low beam) | ±0 | ±0 | ±0 | ±0 | ±0 | ±0 | ±0 |
| oncoming headlight in response to car speed (low beam) | ±0 | ±0 | ±0 | ±0 | +1 | +2 | +3 |
| headlight for normal running (high beam) | +5 | +5 | +5 | +5 | +5 | +5 | +5 |

| | | | | | | | |
|---|---|---|---|---|---|---|---|
| 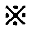 The output value in the Table 13 shows a normal low beam as a basis (1) and a fluctuation of an angle of an optical axis when a normal high beam is made and as an upper limit (+5) | | | | | | | |

Not only the running condition such as a car speed and a braked amount, but also the instruction of an "on/off" of the turn signal indicator lamp switch, the hazard lamp switch and a signal from the rainfall signal are detected simultaneously to have a calculation instruction in the luminous intensity calculation unit 3.

In addition, not only a car speed but also a car speed change amount per hour can be detected to obtain a calculating instruction in the irradiated angle calculating unit 6, which is substantially the same as those of the turn signal indicator lamp system and of the brake lamp system.

The irradiated angle control unit 7 controls an irradiated angle vertically. To put it concretely, the present irradiated angle is detected by a rotary encoder, and the headlight R3 is controlled vertically or maintained on the basis of the result obtained by the detected value and the irradiated angle calculating unit 6. In practice, the structure of the irradiated angle control unit 7 for controlling the irradiated angle of the headlight R3 is not limited thereto, and other controlling units using a servo-motor or hydraulic actuator can be used.

It is possible to make the irradiated angle control unit 7, which controls not only to control the irradiated angle of the headlight R3 vertically, but also to change the irradiated angle of the headlight R3 by rotating the headlight R3. It must be noted that most of the headlights are designed to diffuse the beam of light widely and outwardly.

When the headlight R3 is rotated to face its outer portion upwardly, it is possible to irradiate the beam of light widely and upwardly.

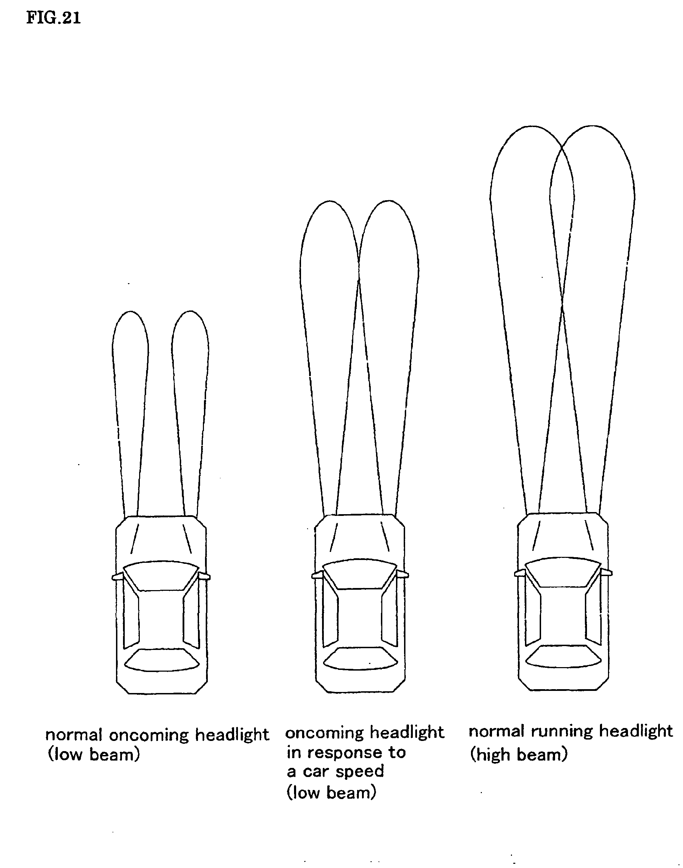

An example of the running car provided with the turn signal indicator lamp system is shown in Fig. 21, wherein an irradiated range radiated by the turn signal indicator lamp is shown. In this example, the irradiated angle of the headlight R3 is changed principally between a low beam and a high beam of the headlight R3.

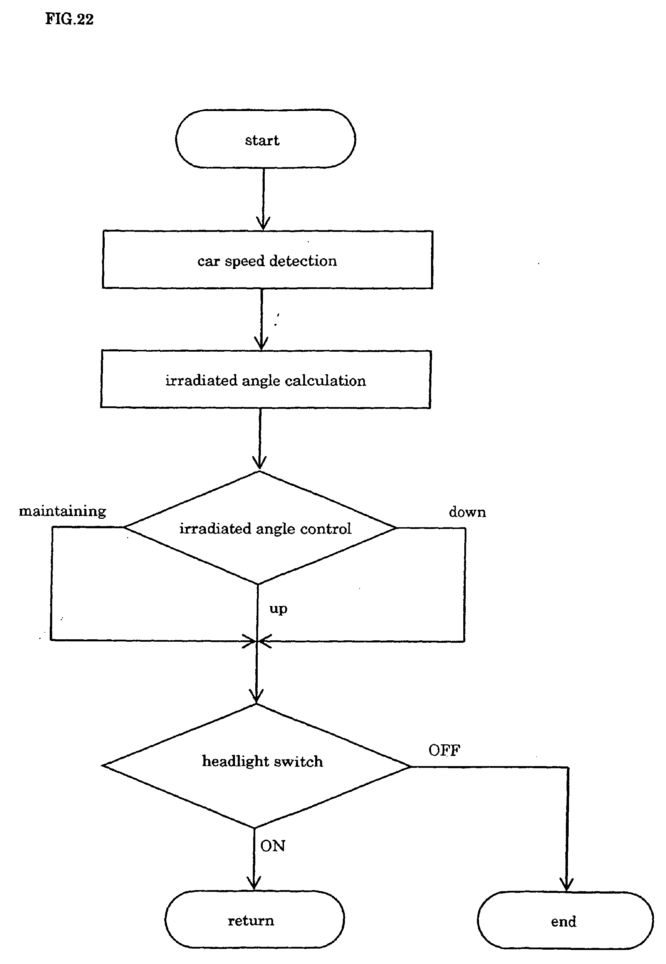

Fig. 22 is a flow chart showing a moving condition of the first mode of the headlight system. The headlight system is driven to start by turning on a headlight R3.

To begin with, the car speed detection unit 1 detects a car speed, which is transmitted into an irradiated angle-calculation unit 6, through which a calculation is carried out to calculate an irradiated angle of the headlight R3 by a program on the basis of the car speed and the outer luminous intensity.

The calculated irradiated angles of the headlight R3 is transmitted into an irradiated angle control unit 7, through which a "present", "upper", "lower" and "maintaining" irradiated angles of the headlight R3 are determined respectively.

Afterwards, in case the headlight R3 is still "on", the operation goes back into the "start" to repeat the abovementioned operation, and when the headlight R3 is "off", the operation finishes.

According to the first mode of the abovementioned headlight system, it becomes possible to show the existence of one's car to the other cars correctly and surely by changing the irradiated angles of the headlight R3, which is very useful in a high speed running.

Fig. 16 is a block diagram showing a second mode of the headlight system for a car.

The headlight system comprises the irradiated angle calculation unit 6 of the aforementioned first mode, which is provided with an input 5.

The instructions from the input 5 together with the car speed detected by the car speed detection unit 1 will becomes a calculation instruction for obtaining the irradiated angles of the headlight R3 and the upper and lower limit information of the irradiated angles of the headlight R3. The structure of the headlight system is substantially the same as that of the first mode except mounting the input 5.

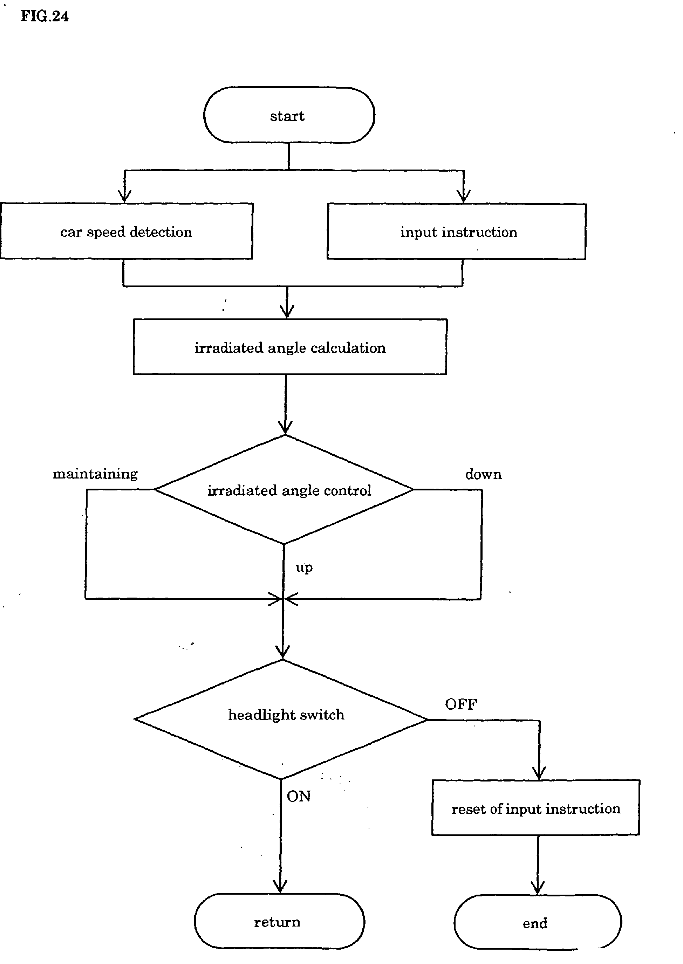

Fig. 24 is a flow chart showing a moving condition of the headlight system of the second mode. The headlight system is driven to start by turning on a headlight R3.

To begin with, the car speed detection unit 1 detects a car speed, which is transmitted into the irradiated angle calculation unit 6, and in case there is an instruction from the input 5, it is transmitted simultaneously into the irradiated angle calculation unit 6, through which calculation is carried out by a program on the basis of the car speed and the input instruction to calculate an irradiated angle of the headlight R3.

The calculated irradiated angle of the headlight R3 is transmitted into the irradiated angle control unit 7, through which a "present", "upper", "lower" and "maintaining" irradiated angles of the headlight R3 are carried out respectively.

Afterwards, in case the headlight R3 is still "on", the operation goes back into the "start" to repeat the abovementioned operation, and when the headlight R3 is "off", the instruction from the input 5 is reset to finish the aforementioned operation.

The headlight system of the second mode enables a driver to make a more detailed controlling of the car than the conventional headlight systems.

In other words, it is possible to input not only a car speed of the running car but also a driver's intention into the input 5 so that the driver's intention can be directly reflected to the driving of the car, the existence of one's car can be shown to the other cars correctly and surely and the other car's attention can be attracted to the one's car.

In addition, the "off" instruction from the input 5 into the headlight system and inputting a changing instruction of an irradiated angle of the headlight R3 can get rid of unnecessary driving and can save energy as well.

The headlight system for a car will be explained. The headlight system comprises a combination of one of the turn signal indicator lamp systems of the aforementioned modes and one of the headlight systems of the aforementioned modes.

In other words, the turn signal indicator lamp system has four modes and the headlight system has two modes, thus totaling up to eight modes. The car speed detection system 1, however, has a structure to share the turn signal indicator lamp system and the headlight system. The input 5 can be considered to have a structure to share the turn signal indicator lamp system and the headlight system

The turn signal indicator lamp system, which comprises the car speed detection system 1, the outer luminous intensity detection unit 2, the luminous intensity calculation unit 3, the luminous intensity control unit 4, the input 5, the irradiated angle calculation unit 6 and the irradiated angle control unit 7, is substantially the same as those of the aforementioned examples

A program for controlling a luminous intensity of the turn signal indicator lamp R 1 and the headlight R3 is a set of instructions shown in Tables 12 to 13 which are written in advance in the ROM.

It should be understood that a set of instructions shown in these Tables are illustrative only, and a calculation method can be changed by a content of the program which is to be written in the ROM.

As in the aforementioned examples, it is possible to make a structure, wherein various information such as a car speed and an outer luminous intensity, but also a braked value, an "on/off" instruction of the turn signal indicator lamp switch and a hazard lamp can be detected simultaneously in order to obtain a calculation instruction for the luminosity intensity unit 3 and the irradiated angle calculation unit 6.

A moving condition of the turn signal indicator lamp system and the headlight system for a car may be an independent combination of these systems. In other words, the turn signal indicator lamp system and the headlight system are combined independently.

When the turn signal indicator lamp switch and a hazard lamp switch are pushed "on", the turn signal indicator lamps are driven to start independently, and when the headlights are turned "on", they are driven to start independently.

In case there are the same structures such as the car speed detection unit 1 and the input 5, it is preferable for the convenience of the systems to share the structures without providing the units independently.

In accordance with the turn signal indicator lamp system and the headlight system, it is possible to show more clear intention of the car and precise control than the ordinary systems which have the independent provision of these units, thus exhibiting synergism.

With the synergistic effect of this invention, it becomes possible to show the existence of one's car to the other cars correctly and surely and also to attract attention of the other cars to the one's car.

The brake light system and the headlight system of this invention will be explained in the following paragraphs.

The brake light and the headlight system has a combined structure of either one of the brake light systems or one of the headlight systems. In other words, the brake light system has four modes and the headlight system has two modes, thus totaling up to eight modes in combination.

The car speed detection unit 1, however, has a structure to share the brake light system and the headlight system. It is thought that the input 5 has a structure to share the brake light system and the headlight system.

The system comprises the car speed detection unit 1, the outer luminous intensity detection unit 2, the luminous intensity unit 3, the luminous intensity control unit 4, the input 5, the irradiated angle calculation unit 6 and the irradiated angle control unit 7, the system of which is substantially the same as those of the aforementioned examples.

A set of instructions is used to control a luminous intensity of the brake light R2 and an irradiated angle of the headlight R3. The instructions are written in advance in the ROM and are shown in Tables 9 - 1 3. The instructions are illustrative only and a method of calculation can be changed wishfully in response to the content of the program to be written in the ROM.

As explained in the foregoing paragraphs, not only the running condition such as a car speed and a braked value, but also the instruction of an "on/off " instruction of the turn signal indicator lamp switch, the hazard lamp switch and a signal from the rainfall signal are detected simultaneously to have a calculation instruction in the luminous intensity calculation unit 3 and the irradiated angle calculation unit 6.

A moving condition of the brake light system and the headlight system of this invention is an independent combination of the aforementioned systems. In other words, in case the brake is put on, the brake system is driven to start simply, and in case the headlight is put on, the headlight is driven to start simply.

In case there are the same structures such as the car speed detection unit 1 and the input 5, it is preferable for the convenience of the systems to share the structures without providing the units independently.

According to the turn signal indicator lamp system and the headlight system, it is possible to show more clear intention of the car and to make a precise control than the ordinary systems which have the independent provision of these units, thus exhibiting synergism.

With the synergistic effect of this invention, it becomes possible to show the existence of one's car to the other cars correctly and surely and also to attract attention of the other cars to the one's car.

A total lamp system for a car will be explained in the following paragraph. The total lamp system has a combined structure of one mode of the turn signal indicator lamp systems and one of the headlight systems.

Namely, the turn signal indicator lamp system has four modes of example, the brake light system has four modes and the headlight system has two modes, thus totaling up to thirty-two modes in combination.

For convenience, the car speed detection system 1 has a structure to share the turn signal indicator lamp system, the brake light system and the headlight system. The luminous intensity control unit 4 has a structure to share the turn signal indicator lamp system and the brake light system. The input 5 has a structure to share the turn signal indicator lamp system, the brake light system and the headlight system. It is preferable to provide the turn signal indicator lamp system and the brake light system separately.

The system comprises the car speed detection unit 1, the outer luminous intensity detection unit 2, the luminous intensity unit 3, the luminous intensity control unit 4, the input 5, the irradiated angle calculation unit 6 and the irradiated angle control unit 7, the system of which is substantially the same as those of the aforementioned examples.

A set of instructions is used to control a luminous intensity of the brake lights R2 and R2 and to control an irradiated angle of the headlight R3. The instructions are written in advance in the ROM and they are a combination of a set of instructions shown in Tables 1 - 1 3. The instructions are illustrative only and a method of calculation can be changed wishfully in response to the content of the program to be written in the ROM.

As in the aforementioned examples, it is possible to make a structure, wherein various information such as a car speed and an outer luminous intensity, but also a braked amount, an "on/off " instruction of the turn signal indicator lamp switch and a hazard lamp can be detected simultaneously in order to obtain a calculating instruction for the luminosity intensity unit 3 and the irradiated angle calculation unit 6.

A moving condition of the total lamp system for a car may be an independent combination of these systems. In other words, the turn signal indicator lamp system, the brake light system and the headlight system are combined independently.

When the turn signal indicator lamp switch and a hazard lamp switch are pushed "on", the turn signal indicator lamps are driven to start independently, and when the headlights are turned "on", they are driven to start independently.

In case there are the same structures such as the car speed detection unit 1 and the input 5, it is preferable for the convenience of the systems to share the structures without providing the units independently.

In accordance with the total lamp system for the car, it is possible to show more clear intention of the car and also to carry out a precise control than the ordinary system having the turn signal indicator lamp system, the brake light system and the headlight system which are combined independently or combined with the given modes to exhibit a synergistic effect.

Namely, with the effects of the turn signal indicator lamp system, the brake light system and the headlight system and the synergistic effect of this invention, it becomes possible to show the existence of one's car to the other cars correctly and surely and also to attract attention of the other cars to the one's car correctly and surely.

## Claims

1. A lamp apparatus for a car which consists of one or more of a turn signal indicator lamp system, a brake light system or a headlight system for a car; the apparatus comprising:
a car speed detection unit (1) for detecting a car speed as a running condition of the car, or an outer luminous intensity detection unit (2) for detecting a luminous intensity around the car as a running condition of the car;
a calculation unit (3) for calculating a desired luminous intensity for the indicator lamp (R1) or the brake light (R2) on the basis of the detected car speed or luminous intensity around the car, or for calculating a desired irradiated angle of the headlight (R3) on the basis of the detected car speed; and
a control unit (4) for controlling the luminous intensity of the indicator lamp (R1) or the brake light (R2), or for controlling the irradiated angle of the headlight (R3);
whereby the luminous intensity of the indicator lamp (R1), the luminous intensity of the brake light (R2), or the irradiated angle of the headlight (R3) is controlled automatically according to a running condition of the car.

2. An apparatus as claimed in claim 1, being a turn signal indicator lamp system for a car, which comprises:
a car speed detection unit (1) for detection a car speed; and
an outer luminous intensity detection unit (2) for detection a luminous intensity around the car;
wherein the calculation unit (3) is for calculating a luminous intensity around the turn signal indicator lamp on the basis of the detected irradiated luminous intensity obtained by the luminous intensity calculation unit, and
the luminous intensity control unit (4) is for controlling a luminous intensity around the turn signal indicator lamp on the basis of the detected irradiated luminous intensity obtained by the luminous intensity calculation unit;
whereby operation of the turn signal indicator lamp and the irradiated luminous intensity of the turn signal indicator lamp which are blinked with operation of the hazard warning are controlled automatically by the luminous intensity calculation unit.

3. An apparatus as claimed in claim 1 or 2, being a turn signal indicator lamp system for a car which comprises an input provided with the calculating unit of the turn signal indicator lamp system wherein the desired luminous intensity of the turn signal indicator lamp (R1) is obtained by an instruction inputted by the input together with the car speed which is detected by the car speed detection unit (1) and/or the outer luminous intensity

4. An apparatus as claimed in claim 1, being a brake light system for a car, which comprises: a car speed detection unit (1) for detecting the speed of a car, wherein the irradiated luminous intensity of the lighted brake light (R2) is controlled in accordance with the detected car speed by the control unit (4) and the irradiated luminous intensity of the lighted brake light is controlled automatically.

5. An apparatus as claimed in claim 1, being a brake light system for a car, which comprises:
a car speed detection unit (1) for detecting a speed of the car, and
an outer luminous intensity detection unit (2) for detecting an outer luminous intensity around the car,
wherein the calculating unit (3) is for calculating a desired luminous intensity of the lighted brake light (R2) based on the car speed and an the outer luminous intensity, whereby the irradiated luminous intensity of the lighted brake light is controlled automatically on braking operation.

6. An apparatus as claimed in claim 4 or 5, which comprises an input provided with the calculating unit (3) wherein the desired luminous intensity of the lighted brake light (R2) is obtained based on instruction inputted by the input together with the car speed and/or the outer luminous intensity.

7. An apparatus as claimed in claim 1, being a combination of a turn signal indicator lamp system for the car and a brake light system for the car.

8. An apparatus as claimed in claim 1, being a headlight system for a car with a car speed detection unit and control of the irradiated angle of the headlight, wherein an input is provided with the calculating unit (3) and wherein the irradiated angle of the headlight (R3) is obtained based on an instruction inputted from the input together with the car speed detected from the car speed detection unit (1).

9. An apparatus as claimed in claim 1, being a combination of a turn signal indicator lamp system and a headlight system for a car speed.

10. An apparatus as claimed in claim 1, being a combination of a brake light system and a headlight system.

11. An apparatus as claimed in claim 1, being a combination of a turn signal indicator lamp system, a brake light system and a headlight system.

12. An apparatus as claimed in claim 7, 10 or 11, wherein the brake light system is as claimed in claim 4, 5 or 6.

13. An apparatus as claimed in claim 7, 9 or 11, wherein the turn signal indicator lamp system is as claimed in claim 2 or 3.

14. an apparatus as claimed in claim 9, 10 or 11, wherein the headlight system is as claimed in claim 8.

## Patentansprüche

1. Lampen-Vorrichtung für ein Fahrzeug, bestehend aus einem oder mehreren Fahrtrichtungsanzeiger-Systemen, einem Bremslicht-System oder einem Vorderlicht-System für ein Fahrzeug; wobei die Vorrichtung aufweist:
eine Fahrzeuggeschwindigkeits-Detektionseinheit (1) zum Detektieren einer Fahrzeuggeschwindigkeit als ein Betriebszustand des Fahrzeugs, oder eine äußere Leuchtstärken-Detektionseinheit (2) zur Detektion einer Leuchtstärke um das Fahrzeug herum als ein Betriebszustand des Fahrzeugs;
eine Kalkulations-Einheit (3) zur Kalkulation einer gewünschten Leuchtstärke der Anzeige-Lampe (R1) oder des Brems-Lichts (R2) auf Basis der detektierten Fahrzeuggeschwindigkeit oder Leuchtstärke um das Fahrzeug herum, oder zur Kalkulation eines gewünschten von dem Vorderlicht (R3) ausgestrahlten Winkels auf Basis der detektieren Fahrzeuggeschwindigkeit; und
eine Steuer-Einheit (4) zur Steuerung der Leuchtstärke der Anzeige-Lampe (R1) oder des Brems-Lichts (R2) oder zur Steuerung des von dem Vorderlicht (R3) ausgeleuchteten Winkels;
wodurch die Leuchtstärke der Signal-Lampe (R1), die Leuchtstärke des Brems-Lichts (R2), oder der von dem Vorderlicht (R3) ausgeleuchtete Winkel automatisch gemäß eines Betriebszustandes des Fahrzeugs gesteuert wird.

2. Vorrichtung gemäß Anspruch 1, die ein Fahrtrichtungsanzeiger-System für ein Fahrzeug ist, mit:
einer Fahrzeuggeschwindigkeits-Detektionseinheit (1) zur Detektion einer Fahrzeuggeschwindigkeit; und
einer äußeren Leuchtstärke-Detektionseinheit (2) zur Detektion einer Leuchtstärke um das Fahrzeug herum;
wobei die Kalkulationseinheit (3) zur Kalkulation einer Leuchtstärke um den Fahrtrichtungsanzeiger herum auf Basis der detektieren ausgestrahlten Leuchtstärke eingerichtet ist, welche mittels der Leuchtstärken-Kalkulationseinheit erhalten wurde;
wodurch die Betätigung des Fahrtrichtungsanzeigers und die ausgestrahlte Leuchtstärke des Fahrtrichtungsanzeigers, welcher bei einer Gefahrenwarnung blinkend betätigt wird, automatisch mittels der Leuchtstärken-Kalkulationseinheit gesteuert werden.

3. Vorrichtung gemäß Anspruch 1 oder 2, welche ein Fahrtrichtungsanzeiger-System für ein Fahrzeug ist, welches einen Input aufweist, der von der Kalkulations-Einheit des Fahrtrichtungsanzeige-Systems bereitgestellt wird, wobei die gewünschte Leuchtstärke des Fahrtrichtung-Anzeigers (R1) mittels eines Befehls erhalten wird, der von dem Input zusammen mit der Fahrzeuggeschwindigkeit eingegeben worden ist, welche mittels der Fahrzeuggeschwindigkeits-Detektionseinheit (1) und/oder der äußeren Leuchtstärke detektiert wird.

4. Vorrichtung nach Anspruch 1, welche ein Bremslicht-System für ein Fahrzeug ist, die aufweist: eine Fahrzeuggeschwindigkeits-Detektionseinheit (1) zur Detektion der Geschwindigkeit eines Fahrzeugs, wobei die ausgestrahlte Leuchtstärke des erleuchteten Bremslichts (R2) in Einklang mit der detektierten Fahrzeuggeschwindigkeit mittels der Steuereinheit (4) gesteuert wird, und die ausgestrahlte Leuchtstärke des beleuchteten Bremslichts automatisch gesteuert wird.

5. Vorrichtung nach Anspruch 1, die ein Bremslicht-System für ein Fahrzeug ist, welche aufweist: eine Fahrzeuggeschwindigkeits-Detektionseinheit (1) zur Detektion einer Geschwindigkeit des Fahrzeugs, und
eine äußere Leuchtstärken-Detektionseinheit (2) zur Detektion einer äußeren Leuchtstärke um das Fahrzeug herum,
wobei die Kalkulations-Einheit (3) zur Kalkulation einer gewünschten Leuchtstärke des erleuchteten Bremslichts (R2) eingerichtet ist und auf der Fahrzeuggeschwindigkeit und der äußeren Leuchtstärke basiert, wobei die ausgestrahlte Leuchtstärke des erleuchteten Bremslichts automatisch während einer Bremsbetätigung gesteuert wird.

6. Vorrichtung gemäß Anspruch 4 oder 5, welche einen Input aufweist, der von der Kalkulations-Einheit (3) bereitgestellt ist, wobei die gewünschte Leuchtstärke des erleuchteten Bremslichts (R2) basierend auf einem Befehl erhalten wird, der von dem Input zusammen mit der Fahrzeuggeschwindigkeit und/oder der äußeren Leuchtstärke eingegeben ist.

7. Vorrichtung gemäß Anspruch 1, die eine Kombination eines Fahrtrichtungsanzeiger-Systems für das Fahrzeug und eines Bremslicht-Systems für das Fahrzeug ist.

8. Vorrichtung nach Anspruch 1, welche ein Vorderlicht-System für ein Fahrzeug mit einer Fahrzeuggeschwindigkeits-Detektionseinheit und Steuerung des ausgestrahlten Winkels des Vorderlichts ist, worin ein Input mittels der Kalkulationseinheit (3) vorgesehen ist, und worin der ausgestrahlte Winkel des Vorderlichts (R3) basierend auf einem Befehl erhalten wird, welcher mittels des Inputs zusammen mit der von der Fahrzeuggeschwindigkeits-Detektionseinheit (1) detektierten Fahrzeuggeschwindigkeit eingegeben wurde.

9. Vorrichtung nach Anspruch 1, welche eine Kombination eines Fahrtrichtungsanzeiger-Systems und eines Vorderlicht-Systems für eine Fahrzeuggeschwindigkeit ist.

10. Vorrichtung nach Anspruch 1, welche eine Kombination eines Bremslicht-Systems und eines Vorderlicht-Systems ist.

11. Vorrichtung nach Anspruch 1, welche eine Kombination eines Fahrtrichtungsanzeiger-System, eines Bremslicht-Systems und eines Vorderlicht-Systems ist.

12. Vorrichtung nach Anspruch 7, 10 oder 11, worin das Bremslicht-System nach einem der Ansprüche 4, 5 oder 6 ausgebildet ist.

13. Vorrichtung nach Anspruch 7, 9 oder 11, worin das Fahrtrichtungsanzeiger-System nach Anspruch 2 oder 3 ausgebildet ist.

14. Vorrichtung nach Anspruch 9, 10 oder 11, worin das Vorderlicht-System gemäß Anspruch 8 ausgebildet ist.

## Revendications

1. Dispositif de feux pour une voiture qui comprend un ou plusieurs d'un système de feux clignotants, un système de feux de freinage et un système de phares pour une voiture, le dispositif comprenant :
■ une unité de détection de vitesse de voiture (1) pour détecter une vitesse de voiture en tant qu'une caractéristique de fonctionnement de la voiture, ou une unité de détection d'intensité lumineuse extérieure (2) pour détecter une intensité lumineuse autour de la voiture en tant qu'une caractéristique de fonctionnement de la voiture ;
■ une unité de calcul (3) pour calculer une intensité lumineuse souhaitée pour le feu clignotant (R1) ou le feu de freinage (R2) sur la base de la vitesse de voiture détectée ou de l'intensité lumineuse autour de la voiture, ou pour calculer un angle irradié souhaité du phare (R3) sur la base de la vitesse de voiture détectée ; et
■ une unité de commande (4) pour commander l'intensité lumineuse du feu clignotant (R1) ou du feu de freinage (R2), ou pour commander l'angle irradié par le phare (R3) ;
moyennant quoi l'intensité lumineuse du feu clignotant (R1), l'intensité lumineuse du feu de freinage (R2) ou l'angle irradié par le phare (R3) est commandé(e) automatiquement selon une caractéristique de fonctionnement de la voiture.

2. Dispositif selon la revendication 1, étant un système de feux clignotants pour voiture, qui comprend :
■ une unité de détection de vitesse de voiture (1) pour détecter la vitesse d'une voiture ; et
■ une unité de détection d'intensité lumineuse extérieure (2) pour détecter une intensité lumineuse autour de la voiture ;
dans lequel l'unité de calcul (3) est destinée à calculer une intensité lumineuse autour du feu clignotant sur la base de l'intensité lumineuse irradiée détectée obtenue par l'unité de calcul d'intensité lumineuse ; et
l'unité de commande d'intensité lumineuse (4) est destinée à commander une intensité lumineuse autour du feu clignotant sur la base de l'intensité lumineuse irradiée détectée obtenue par l'unité de calcul d'intensité lumineuse ;
moyennant quoi le fonctionnement du feu clignotant et l'intensité lumineuse irradiée par le feu clignotant qui clignotent avec le fonctionnement du feu de détresse sont commandés automatiquement par l'unité de calcul d'intensité lumineuse.

3. Dispositif selon la revendication 1 ou 2, étant un système de feux clignotants pour une voiture qui comprend une entrée dotée de l'unité de calcul du système de feux clignotants, dans lequel l'intensité lumineuse souhaitée du feu clignotant (R1) est obtenue par une instruction entrée par l'entrée conjointement avec la vitesse de la voiture qui est détectée par l'unité de détection de vitesse de voiture (1) et/ou l'intensité lumineuse éxtérieure.

4. Dispositif selon la revendication 1, étant un système de feux de freinage pour une voiture, qui comprend : une unité de détection de vitesse de voiture (1) pour détecter la vitesse d'une voiture, dans lequel l'intensité lumineuse irradiée par le feu de freinage éclairé (R2) est commandée selon la vitesse de voiture détectée par l'unité de commande (4) et l'intensité lumineuse irradiée par le feu de freinage éclairé est commandée automatiquement.

5. Dispositif selon la revendication 1, étant un système de feux de freinage pour une voiture, qui comprend :
■ une unité de détection de vitesse de voiture (1) pour détecter une vitesse de la voiture, et
■ une unité de détection d'intensité lumineuse extérieure (2) pour détecter une intensité lumineuse extérieure autour de la voiture,
dans lequel l'unité de calcul (3) consiste à calculer une intensité lumineuse souhaitée du feu de freinage éclairé (R2) sur la base de la vitesse de voiture et de l'intensité lumineuse extérieure, moyennant quoi l'intensité lumineuse irradiée par le feu de freinage éclairé est commandée automatiquement lors de l'actionnement des freins.

6. Dispositif selon la revendication 4 ou 5, qui comprend une entrée dotée de l'unité de calcul (3), dans lequel l'intensité lumineuse souhaitée du feu de freinage éclairé (R2) est obtenue sur
la base d'une instruction entrée par l'entrée conjointement avec la vitesse de la voiture et/ou l'intensité lumineuse extérieure.

7. Dispositif selon la revendication 1, étant une combinaison d'un système de feux clignotants pour la voiture et d'un système de feux de freinage pour la voiture.

8. Dispositif selon la revendication 1, étant un système de phares pour une voiture avec une unité de détection de vitesse de voiture et une commande de l'angle irradié par le phare, dans lequel une entrée est dotée de l'unité de calcul (3) et dans lequel l'angle irradié par le phare (R3) est obtenu sur la base d'une instruction entrée à partir de l'entrée conjointement avec la vitesse de voiture détectée à partir de l'unité de détection de vitesse de voiture (1).

9. Dispositif selon la revendication 1, étant une combinaison d'un système de feux clignotants et d'un système de phares pour une vitesse de voiture.

10. Dispositif selon la revendication 1, étant une combinaison d'un système de feux de freinage et d'un système de phares.

11. Dispositif selon la revendication 1, étant une combinaison d'un système de feux clignotants, d'un système de feux de freinage et d'un système de phares.

12. Dispositif selon la revendication 7, 10 ou 11, dans lequel le système de feux de freinage est tel que présenté dans la revendication 4, 5 ou 6.

13. Dispositif selon la revendication 7, 9 ou 11, dans lequel le système de feux clignotants est tel que présenté dans la revendication 2 ou 3.

14. Dispositif selon la revendication 9, 10 ou 11, dans lequel le système de phares est tel que présenté dans la revendication 8.
